# EUROPÄISCHE PATENTANMELDUNG

(11) **EP 4 825 909 A1**
(43) Veröffentlichungstag der Anmeldung: **21.10.2026**
(21) Anmeldenummer: 26170929.9
(22) Anmeldetag: 07.04.2026
(51) Int. Cl.: C08L 7/00, B60C 1/00, C08K 5/3437

(54) **SCHWEFELVERNETZBARE KAUTSCHUKMISCHUNG FÜR DIE GUMMIERUNG EINES FESTIGKEITSTRÄGERS, FESTIGKEITSTRÄGER UND FAHRZEUGREIFEN**

(30) Priorität: 11.04.2025 DE 102025114368
(71) Anmelder: Continental Reifen Deutschland GmbH, 30175 Hannover (DE)
(72) Erfinder: Schmidt, Philipp, 30175 Hannover (DE); Jacob, Andreas, 30175 Hannover (DE); Strohmeier, Julian, 30175 Hannover (DE); Haubold, Thorben Soeren, 30175 Hannover (DE); Fleck, Frank, 30175 Hannover (DE); Recker, Carla, 30175 Hannover (DE)
(74) Vertreter: Continental Corporation

(57) **Zusammenfassung**

Die Erfindung betrifft eine schwefelvernetzbare Kautschukmischung für die Gummierung eines Festigkeitsträgers, einen entsprechenden Festigkeitsträger sowie einen Fahrzeugreifen, der solch einen Festigkeitsträger in wenigstens einem Bauteil aufweist, die Mischung umfassend
(a) einen oder mehr als einen Polyisopren-Kautschuk in einer Gesamtmenge in einem Bereich von 30 bis 100 phr;
(b) einen oder mehr als einen von (a) verschiedenen Dienkautschuk in einer Gesamtmenge in einem Bereich von 0 bis 70 phr;
(c) eine oder mehr als eine Verbindung der Formel (I) wie im Text weiter definiert 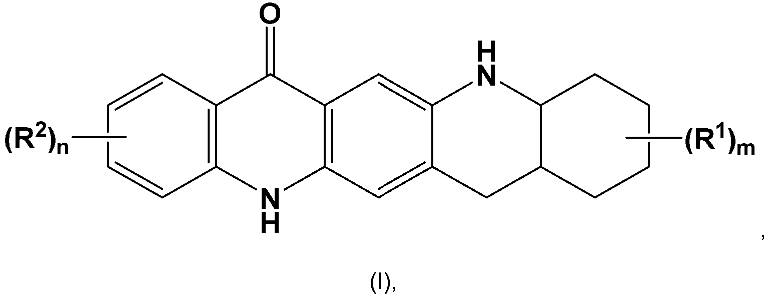 (d) einen oder mehr als einen Füllstoff; und
(e) mindestens ein Methylen-Donor / Methylen-Akzeptor Reaktionspaar, Vorkondensate und/oder Harze daraus.

## Beschreibung

Die Erfindung betrifft eine schwefelvernetzbare Kautschukmischung für die Gummierung eines Festigkeitsträgers, einen entsprechenden Festigkeitsträger sowie einen Fahrzeugreifen, der solch einen Festigkeitsträger in wenigstens einem Bauteil aufweist, die Mischung umfassend
(a) einen oder mehr als einen Polyisopren-Kautschuk in einer Gesamtmenge in einem Bereich von 30 bis 100 phr;
(b) einen oder mehr als einen von (a) verschiedenen Dienkautschuk in einer Gesamtmenge in einem Bereich von 0 bis 70 phr;
(c) eine oder mehr als eine Verbindung der Formel (I) wie nachfolgend im Text weiter definiert 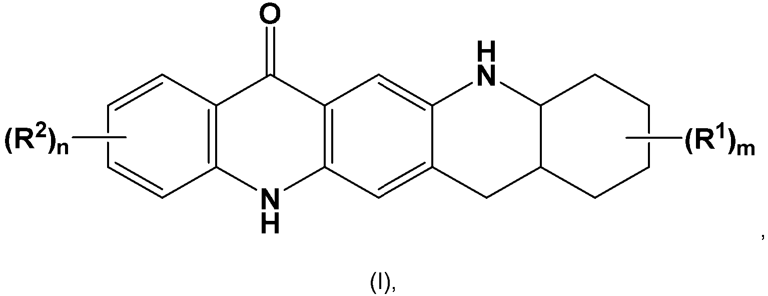
(d) einen oder mehr als einen Füllstoff; und
(e) mindestens ein Methylen-Donor / Methylen-Akzeptor Reaktionspaar, Vorkondensate und/oder Harze daraus.

Die Verbindung der Formel (I), vorzugsweise alle Ausführungen davon, die nachfolgend als bevorzugt beschrieben werden, inkl. der Verbindung der Formel (II), dienen als Alterungsschutzmittel in der erfindungsgemäßen Kautschukmischung, vorzugsweise als ein gegenüber 6PPD mit verbesserter Wirkung wirkendes Alterungsschutzmittel.

Es ist bekannt, dass in Fahrzeugreifen polymere Verbindungen, insbesondere Kautschuke, eingesetzt werden. Naturkautschuk (NR), synthetische Polymere (beispielsweise IR, BR, SSBR, ESBR, etc.) aber auch natürliche sowie synthetische Öle und Harze unterliegen bei längerer Lagerung und häufig konkret in der Zielanwendung, die oft bei höheren Temperaturen abläuft, Oxidationsreaktionen, die sich nachteilig auf die ursprünglich gewünschten Eigenschaften auswirken. Je nach Art der Kautschuke leiden diese mehr oder weniger unter Brüchen in der Polymerkette, so dass eine nachträgliche, unerwünschte Härtung des Materials bzw. Artikels eintritt.

Alterungsschutzmittel tragen daher maßgeblich zu einer verbesserten Langlebigkeit von entsprechenden Zusammensetzungen bzw. Fahrzeugreifen bei.

Typische Alterungsschutzmittel sind aromatische Amine, wie beispielsweise 6PPD (N-(1,3-Dimethylbutyl)-N'-phenyl-p-phenylendiamin), IPPD (N-Isopropyl-N'-phenyl-p-phenylendiamin) oder SPPD (N-(1-phenylethyl)-N'-phenyl-p-phenylendiamin). Diese Verbindungen und Alterungsschutzmittel im Allgemeinen können mit Sauerstoff, Ozon und/oder Radikalen, vorzugsweise Alkyl-, Alkoxy- und Alkylperoxyradikalen, reagieren und diese abfangen und somit die polymeren bzw. langkettigen Verbindungen, die typischerweise in den Kautschuken vorliegen, vor insbesondere unerwünschten Oxidations- und radikalischen Reaktionen schützen. Alterungsschutzmittel, die mit Ozon reagieren bzw. dieses abfangen, werden häufig auch spezifisch "Ozonschutzmittel" oder "Antiozonant" genannt.

Nachteil der oben genannten Verbindungen ist allerdings der Verdacht, dass diese krebserregend und/oder umweltschädlich sein könnten. Daher ist es ein regelmäßiges Bedürfnis neue Alterungsschutzmittel mit mindestens ähnlichem Alterungsschutz bereitzustellen, aber eine potentiell geringere Belastung für die Umwelt darstellen.

Alternative Alterungsschutzmittel sind durchaus bekannt. So offenbart WO 2023/143677 A1 Alterungsschutzmittel auf Acridon-Basis für Kautschukmischungen.

In der Praxis müssen solche neuen Alterungsschutzmittel jedoch nicht nur eine ausreichend lange Wirkung (idealerweise über die Lebensdauer eines Reifens), sondern auch bei adäquater Einsatzmenge eine ausreichend starke Schutzwirkung über diesen Zeitraum erzielen. Dabei spielen unter anderem Faktoren wie Löslichkeit und Diffusion innerhalb der vulkanisierten Kautschukmischung eine bedeutende Rolle. Aber auch ein Zusammenspiel mit weiteren Mischungsbestandteilen, die beispielsweise negative Effekte ausgleichen oder andere wünschenswerte Eigenschaften betonen, muss letztendlich gegeben sein.

Der vorliegenden Erfindung liegt die Aufgabe zugrunde, insbesondere von 6PPD verschiedene Verbindungen bereitzustellen, die neben einer potentiell geringeren Umweltbelastung sowohl einen ausreichend langanhaltenden als auch ausreichend starken Alterungsschutz in entsprechenden Reifenbauteilen bereitstellen. Zudem sollen die Verbindungen einen tatsächlichen Einsatz in der Praxis ermöglichen und in Wechselwirkung mit anderen Mischungsbestandteilen keine negativen Effekte hervorrufen. Dies ist insbesondere wichtig mit Blick auf komplexe Kautschukmischungen, wie beispielsweise solche, die für die Gummierung von Festigkeitsträgern eingesetzt werden. Gerade solche Mischungen zeichnen sich durch die zusätzliche Anwesenheit eines Verstärkersystems aus, um eine Anhaftung zum Festigkeitsträger gewährleisten zu können.

Gelöst wird diese Aufgabe durch die erfindungsgemäße schwefelvernetzbare Kautschukmischung für die Gummierung eines Festigkeitsträgers, die Mischung umfassend
(a) einen oder mehr als einen Polyisopren-Kautschuk in einer Gesamtmenge in einem Bereich von 30 bis 100 phr;
(b) einen oder mehr als einen von (a) verschiedenen Dienkautschuk in einer Gesamtmenge in einem Bereich von 0 bis 70 phr;
(c) eine oder mehr als eine Verbindung der Formel (I) 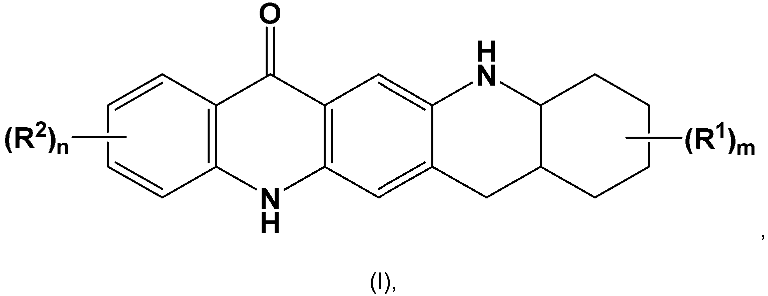 wobei
   R¹ an der äußeren Cyclohexan-Gruppe und/oder der benachbarten Piperidin-Gruppe gebunden ist und unabhängig voneinander ausgewählt ist aus der Gruppe bestehend aus
      xi) C₁- bis C₄-Alkyl-Resten und C₁- bis C₄-Alkoxy-Resten,
      und
   der Rest R² unabhängig voneinander ausgewählt ist aus der Gruppe bestehend aus
      aliphatischen C₁- bis C₁₂-Resten, aromatischen Resten, Halogen-Resten, Cyano-Resten, Ester-Resten, Keton-Resten, Ether-Resten und Thioether-Resten,
   und wobei
      n den Wert 0 oder 1 oder 2 oder 3 oder 4 annimmt und die Reste R² im Fall von n gleich 2 oder 3 oder 4 unabhängig voneinander gleich oder verschieden sind, und
      m eine ganze Zahl in einem Bereich von 1 bis 12 ist, wobei die Reste R¹ im Fall von m gleich 2 oder größer unabhängig voneinander gleich oder verschieden sind;
(d) einen oder mehr als einen Füllstoff; und
(e) mindestens ein Methylen-Donor / Methylen-Akzeptor Reaktionspaar, Vorkondensate und/oder Harze daraus.

Die erfindungsgemäße Kautschukmischung enthält ein spezifisches Acridon-Derivat als Alterungsschutzmittel und weist gegenüber Kautschukmischungen mit dem sehr bekannten 6PPD nicht nur ein geringeres Gefahrenpotential auf (6PPD bzw. Abbauprodukte davon werden als toxisch für den Silberlachs eingestuft), sondern zusätzlich eine gegenüber 6PPD qualitativ verbesserte Schutzwirkung, wenn es in Kautschukmischungen eingesetzt wird, die für die Gummierung von Festigkeitsträgern vorgesehen sind. Obwohl aus der WO 2023/143677 A1 bereits eine verbesserte Langzeitwirkung in eher einfachen Kautschukmischungen gegenüber 6PPD beschrieben wurde, wurde nun überraschend festgestellt, dass Acridon-Derivate insbesondere in Kautschukmischungen für die Gummierung von Festigkeitsträgern (auch Gummierungsmischungen genannt) eine insbesondere qualitative Verbesserung des Alterungsschutzes bewirken (siehe Beispiele unten). Typischerweise sind solche Gummierungsmischungen komplexer aufgebaut, da sie üblicherweise zusätzlich mindestens ein Haftsystem in der Kautschukmischung enthalten, welches bei der Vulkanisation ein zusätzliches Netzwerk ausbildet. Im Kontext der vorliegenden Erfindung gilt grundsätzlich, dass die Erfindung nicht an einen bestimmten Wirkmechanismus oder eine bestimmte Erklärung gebunden sein soll.

Im Kontext der vorliegenden Erfindung bedeutet die verwendete Angabe phr (parts per hundred parts of rubber by weight) die in der Kautschukindustrie übliche Mengenangabe für Mischungen. Die Dosierung der Gewichtsteile wird dabei stets auf 100 Gewichtsteile der gesamten Masse aller in der Mischung vorhandenen festen Kautschuke bezogen bzw. referenziert.

Im Kontext der vorliegenden Erfindung gilt, dass sämtliche bevorzugte Ausgestaltungen, die sich unter anderem in den Patentansprüchen widerspiegeln, ebenfalls mit umfasst sind. Insbesondere sind von der Erfindung auch Ausgestaltungen umfasst und gelten als offenbart, die sich durch Kombination unterschiedlicher Merkmale ergeben (auch mit jeweils unterschiedlicher Abstufung bei der Bevorzugung dieser Merkmale), sodass auch eine Kombination eines ersten als "bevorzugt" bezeichneten Merkmals mit einem zweiten als z. B. "besonders bevorzugt" bezeichneten Merkmals von der Erfindung umfasst und offenbart ist.

Nachfolgend wird die schwefelvernetzbare Kautschukmischung im Detail beschrieben.

Die erfindungsgemäße Kautschukmischung ist als Gummierung für Festigkeitsträger besonders geeignet. Daher ist die erfindungsgemäße Kautschukmischung gleichermaßen als Gummierungsmischung zu bezeichnen.

Gummierungsmischungen wie die erfindungsgemäße Kautschukmischung bilden zusammen mit einem Festigkeitsträger einen heterogenen Verbund, der eine ausreichend hohe Anhaftung an den Grenzflächen zwischen Festigkeitsträger und Kautschukmischung erfordert.

Zur Erreichung der erforderlichen Anhaftung umfassen Gummierungsmischungen wie die vorliegende erfindungsgemäße Kautschukmischung typischerweise ein sogenanntes Haftsystem, welches üblicherweise auf Basis eines Methylen-Donor / Methylen-Akzeptor Reaktionspaares, Vorkondensate und/oder Harze daraus.

Im Kontext der vorliegenden Erfindung bedeutet der Begriff "Vorkondensate [...] daraus", Oligomere von Methylen-Donor / Methylen-Akzeptor Monomeren aus einer katalysierten Kondensationsreaktion. Dies umfasst mindestens zwei solcher Monomere und reicht in manchen Fällen bis 10, vereinzelt größer 10. Typische Molekulargewichtsbereiche Mw liegen in einem Bereich von 200 bis 4000 g/mol, vorzugsweise von 400 bis 3000 g/mol. Grundsätzlich wird davon ausgegangen, dass Molekulargewichte größer 4000 g/mol bereits überwiegend einem Harz zugeordnet werden können.

Zur Verbesserung der Anhaftung insbesondere gegenüber metallischen Festigkeitsträgern, vorzugsweise aus Stahl, besonders bevorzugt vermessingter Stahl, werden Kobaltverbindungen eingesetzt. Bevorzugt ist daher eine erfindungsgemäße Kautschukmischung zusätzlich umfassend
(f) mindestens ein organisches und/oder anorganisches Kobaltsalz.

Besonders bevorzugt sind organische Kobaltsalze, ganz besonders ausgewählt aus der Gruppe bestehend aus Kobaltstearat, Kobaltborat, Kobaltborat-alkanoat, Kobaltnaphthenat, Kobaltrhodinat, Kobaltoctoat und Kobaltadipat.

Bevorzugt ist eine erfindungsgemäße Kautschukmischung, vorzugsweise wie als bevorzugt beschrieben, wobei das mindestens eine organische und anorganische Kobaltsalz gemäß (f) in einer Gesamtmenge von 0,1 bis 5 phr vorliegt, vorzugsweise von 0,15 bis 4 phr, weiter bevorzugt von 0,2 bis 3 phr, insbesondere bevorzugt von 0,25 bis 2 phr, noch weiter bevorzugt von 0,3 bis 1 phr, ganz besonders bevorzugt von 0,35 bis 0,5 phr.

Die erfindungsgemäße Kautschukmischung umfasst gemäß (a) einen oder mehr als einen Polyisopren-Kautschuk in einer Gesamtmenge in einem Bereich von 30 bis 100 phr. Vorzugsweise handelt es sich dabei um feste Kautschuke, referenziert auf eine Temperatur von 25°C.

Besonders bevorzugt ist eine erfindungsgemäße Kautschukmischung, vorzugsweise wie als bevorzugt beschrieben, wobei der eine oder mehr als eine Polyisopren-Kautschuk gemäß (a) der überwiegende Kautschuk in der Mischung ist (d.h. mit vorzugsweise mindestens 51 phr vorliegt) und somit die erfindungsgemäße Kautschukmischung in ihrer Basis eine auf Polyisopren beruhende Kautschukmischung ist.

Bevorzugt ist eine erfindungsgemäße Kautschukmischung, vorzugsweise wie als bevorzugt beschrieben, wobei der eine oder mehr als eine Polyisopren-Kautschuk gemäß (a) in einer Gesamtmenge von 35 bis 100 phr, vorzugsweise von 40 bis 100 phr, weiter vorzugsweise von 45 bis 99 phr vorliegt, vorzugsweise von 51 bis 97 phr, weiter bevorzugt von 58 bis 95 phr, insbesondere bevorzugt von 65 bis 93 phr, noch weiter bevorzugt von 71 bis 91 phr, ganz besonders bevorzugt von 77 bis 89 phr. In diesen bevorzugten Mengenbereichen liegen der Kautschukmischung zunehmend verbesserte Reißeigenschaften zugrunde. Vorzugsweise wird der zu 100 phr verbliebene Anteil von dem von (a) verschiedenen Dienkautschuk gemäß (b) aufgefüllt. In einigen Fällen ist es bevorzugt, dass sämtliche der vorstehend genannten Untergrenzen mit 100 phr als Obergrenze vorliegen (sofern noch keine 100 phr als Obergrenze genannt sind). In einigen besonders bevorzugten und ausgewählten Fällen liegt der eine oder mehr als eine Polyisopren-Kautschuk in einer Gesamtmenge in einem Bereich von 95 bis 100 phr vor, besonders bevorzugt von 99 bis 100 phr.

Bevorzugt ist eine erfindungsgemäße Kautschukmischung, vorzugsweise wie als bevorzugt beschrieben, wobei der eine oder mehr als eine Polyisopren-Kautschuk gemäß (a) mindestens einen natürlichen Polyisopren-Kautschuk (auch bekannt als und gleichbedeutend mit den Begriffen Naturkautschuk oder natürlicher Kautschuk: abgekürzt mit "NR"), mindestens einen synthetischen Polyisopren-Kautschuk (abgekürzt mit "IR") und/oder mindestens einen epoxidierten Polyisopren-Kautschuk (ENR) umfasst; vorzugsweise mindestens einen natürlichen Polyisopren-Kautschuk (NR) und/oder mindestens einen synthetischen Polyisopren-Kautschuk (IR), besonders bevorzugt mindestens einen natürlichen Polyisopren-Kautschuk (NR). Vorzugsweise umfasst der eine oder mehr als eine Polyisopren-Kautschuk gemäß (a) ausschließlich einen oder mehr als einen natürlichen Polyisopren-Kautschuk (NR), besonders bevorzugt wie nachfolgend als bevorzugt beschrieben.

Natürliches Polyisopren (NR) bedeutet einen Kautschuk, der durch Ernte von natürlichen Quellen wie Kautschukbäumen (Hevea brasiliensis) oder nicht-Kautschukbaumquellen (wie z. B. Guayule oder Löwenzahn (z. B. Taraxacum koksaghyz)) gewonnen wird. Zudem wird im Kontext der vorliegenden Erfindung unter natürlichem Polyisopren (NR) kein synthetisches Polyisopren (IR) verstanden, sondern ist davon zu unterscheiden.

Vorzugsweise umfasst der eine oder mehr als eine Polyisopren-Kautschuk gemäß (a) mindestens einen *cis*-1,4-Polyisopren-Kautschuk und/oder mindestens einen 3,4-Polyisopren-Kautschuk. Dies gilt vorzugsweise unabhängig davon, ob es sich um einen natürlichen oder synthetischen Polyisopren-Kautschuk handelt. Bevorzugt ist mindestens ein *cis*-1,4-Polyisopren-Kautschuk mit besonders bevorzugt einem *cis-1,4* Anteil größer 90 Gew.-%. Solch ein Polyisopren-Kautschuk wird vorzugsweise durch stereospezifische Polymerisation in Lösung mit Ziegler-Natta-Katalysatoren oder unter Verwendung von fein verteiltem Lithiumalkylen erhalten. Weiterhin handelt es sich typischerweise auch bei Naturkautschuk (NR) um einen solchen cis-1,4 Polyisopren-Kautschuk. Besonders bevorzugt ist daher mindestens ein Naturkautschuk (NR) umfassend mindestens einen cis-1,4-Polyisopren-Kautschuk, vorzugsweise mit einem cis-1,4-Anteil größer oder gleich 99 Gew.-%.

Der eine oder mehr als eine Polyisopren-Kautschuk gemäß (a) weist vorzugsweise ein gewichtsmittleres Molekulargewicht Mw gemäß GPC in einem Bereich von 250.000 bis 5.000.000 g/mol auf. Es gehört somit zu den hochmolekularen Kautschuken, die in die Hundert Teile bei der Berechnung der phr-Bezugsgröße eingehen.

Die erfindungsgemäße Kautschukmischung umfasst zudem gemäß (b) einen oder mehr als einen von (a) verschiedenen Dienkautschuk in einer Gesamtmenge in einem Bereich von 0 bis 70 phr. Somit ist der eine oder mehr als eine Dienkautschuk gemäß (b) optional. Bevorzugt ist jedoch eine erfindungsgemäße Kautschukmischung, vorzugsweise wie als bevorzugt beschrieben, umfassend einen oder mehr als einen Dienkautschuk gemäß (b), d.h. der eine oder mehr als eine von (a) verschiedene Dienkautschuk ist in der erfindungsgemäßen Kautschukmischung vorhanden. Vorzugsweise ist die Gesamtmenge von (b) größer 0 (Null) phr und beträgt maximal 70 phr, so dass die Gesamtmenge an (a) kleiner 100 phr als Obergrenze ist. In einigen ausgewählten aber bevorzugten Fällen liegt die Gesamtmenge von (b) in einem Bereich von 0 (Null) bis 1 phr, d.h. die Menge an (a) ist dann vorzugsweise 99 bzw. 100 phr. In solchen Fällen handelt es sich um eine schwefelvernetzbare Kautschukmischung für die Gummierung eines Festigkeitsträgers die (weitestgehend) ausschließlich auf einen oder mehr als einen Polyisopren-Kautschuk gemäß (a) basiert.

Im Kontext der vorliegenden Erfindung ist ein Dienkautschuk durch Polymerisation oder Copolymerisation von Dienen und/oder Cycloalkenen entstanden und weist somit entweder in der Hauptkette oder in den Seitenketten C=C-Doppelbindungen auf. Typische Monomere für eine Polymerisation umfassen Isopren und Butadien.

Vorzugsweise handelt es sich bei dem einen oder mehr als einen von (a) verschiedenen Dienkautschuk gemäß (b) um feste Dienkautschuke, referenziert auf eine Temperatur von 25°C.

Vorzugsweise bildet der eine oder mehr als eine von (a) verschiedene Dienkautschuk gemäß (b) nicht den mengenmäßig größten Anteil der Kautschuke in der erfindungsgemäßen Kautschukmischung. Bevorzugt ist die Gesamtmenge von (b) kleiner 50 phr.

Besonders bevorzugt ist eine erfindungsgemäße Kautschukmischung, wobei der eine oder mehr als eine von (a) verschiedene Dienkautschuk (d.h. gemäß (b)) in einer Gesamtmenge von 0 bis 65 phr, vorzugsweise von 0 bis 60, weiter vorzugsweise von 1 bis 55 phr vorliegt, vorzugsweise von 3 bis 49 phr, weiter bevorzugt von 5 bis 42 phr, insbesondere bevorzugt von 7 bis 35 phr, noch weiter bevorzugt von 9 bis 29 phr, ganz besonders bevorzugt von 11 bis 23 phr. Vorzugsweise wird der zu 100 phr verbliebene Anteil von dem einen oder mehr als einen Polyisopren-Kautschuk gemäß (a) aufgefüllt. In einigen Fällen ist es bevorzugt, dass sämtliche der vorstehend genannten Obergrenzen mit 0 phr als Untergrenze vorliegen (sofern noch keine 0 phr als Untergrenze genannt sind).

Vorzugsweise umfasst der eine oder mehr als eine von (a) verschiedene Dienkautschuk (d.h. gemäß (b)) einen oder mehr als einen Styrol-Butadien-Kautschuk (SBR), einen oder mehr als einen Butadien-Isopren-Kautschuk, einen oder mehr als einen hydrierten Styrol-Butadien-Kautschuk, und/oder einen oder mehr als einen Butadien-Kautschuk (BR); vorzugsweise einen oder mehr als einen Butadien-Kautschuk (BR); besonders bevorzugt ausschließlich einen oder mehr als einen Butadien-Kautschuk (BR). Im Falle eines Styrol-Butadien-Kautschuks (SBR), handelt es sich vorzugsweise um einen festen Styrol-Butadien-Kautschuk (SBR), referenziert auf eine Temperatur von 25°C. Besonders bevorzugt umfasst der eine oder mehr als eine Styrol-Butadien-Kautschuk (SBR) mindestens einen lösungspolymerisierten Styrol-Butadien-Kautschuk (SSBR) und/oder mindestens einen emulsionspolymerisierten Styrol-Butadien-Kautschuk (ESBR).

Besonders bevorzugt umfasst der eine oder mehr als eine Butadien-Kautschuk (BR) einen sogenannten hoch-cis Butadien-Kautschuk (BR), vorzugsweise mit einem cis-Anteil von 90% oder mehr, besonders bevorzugt von 95% oder mehr, ganz besonders bevorzugt von 98% oder mehr.

In manchen Fällen ist eine erfindungsgemäße Kautschukmischung bevorzugt, vorzugsweise wie als bevorzugt beschreiben, wobei der eine oder mehr als eine von (a) verschiedenen Dienkautschuk jeweils ein gewichtsmittleres Molekulargewicht Mw gemäß GPC in einem Bereich von 150.000 bis 1.100.000 g/mol aufweist.

Bevorzugt ist eine erfindungsgemäße Kautschukmischung, vorzugsweise wie als bevorzugt beschreiben, wobei die Gesamtmenge von (a) mindestens der zweifachen Gesamtmenge von (b) entspricht, besonders bevorzugt mindestens der dreifachen Gesamtmenge.

Ganz besonders bevorzugt ist eine erfindungsgemäße Kautschukmischung, vorzugsweise wie als bevorzugt beschrieben, umfassend für (a) einen oder mehr als einen natürlichen Polyisopren-Kautschuk (NR) und für (b) einen oder mehr als einen Butadien-Kautschuk (BR), wobei vorzugsweise die Gesamtmenge von (a) größer als die Gesamtmenge von (b) ist, besonders bevorzugt die Gesamtmenge von (a) mindestens der zweifachen Gesamtmenge von (b) entspricht, besonders bevorzugt der dreifachen Gesamtmenge von (b).

In manchen Fällen ist eine erfindungsgemäße Kautschukmischung bevorzugt, vorzugsweise wie als bevorzugt beschrieben, wobei einer, mehrere oder alle des einen oder mehr als einen von (a) verschiedenen Dienkautschuks gemäß (b) durch Substituenten modifiziert ist, so dass ein modifizierter Dienkautschuk resultiert. Vorzugsweise handelt es sich um einen oder mehrere Substituenten, welche vorzugsweise am Polymer-Rückgrat und/oder endständig vorliegen. Diese Substituenten bewirken besonders bevorzugt eine weitere Wechselwirkung mit dem einen oder mehr als einen Füllstoff gemäß (d), insbesondere mit Füllstoffen, die eine polare Oberfläche bzw. polare funktionelle Gruppen aufweisen, wie beispielswiese Kieselsäure-Füllstoffe. Andere Substituenten wiederum ermöglichen eine Wechselwirkung vorzugsweise mit unpolaren Füllstoffen, wie beispielsweise Ruße. Solche Kautschuke werden typischerweise auch funktionalisierte Kautschuke genannt.

Vorzugsweise sind diese Substituenten (d.h. für Kautschuke gemäß (b)) unabhängig voneinander ausgewählt aus der Gruppe bestehend aus Hydroxy-Gruppen, EthoxyGruppen, Epoxy-Gruppen, Amino-Gruppen, Ammonium-Gruppen, Aminosiloxan-Gruppen, Carboxy-Gruppen, Phthalocyanin-Gruppen und Silicium-enthaltende Gruppen. Bevorzugte Silicium-enthaltende Gruppen umfassen Silan und/oder Siloxan-Gruppen. Die Auswahl der Substituenten ist jedoch vorzugsweise nicht auf die vorstehend genannten beschränkt. In einigen Fällen umfassen die Substituenten zudem vorzugsweise ein oder mehrere Metalle, umfassend Metallatome und/oder Metallionen. Insbesondere die Amino- und Ammonium-Gruppen treten vorzugsweise mit Rußen in Wechselwirkung.

In anderen Fällen ist eine erfindungsgemäße Kautschukmischung bevorzugt, vorzugsweise wie als bevorzugt beschrieben, wobei der eine oder mehr als eine von (a) verschiedene Dienkautschuk (d.h. gemäß (b)) nicht durch Substituenten modifiziert ist, d.h. es liegen unmodifizierte bzw. unfunktionalisierte Kautschuke für (b) vor. In wieder anderen Fällen ist es bevorzugt, dass sowohl funktionalisierte als auch unfunktionalisierte Kautschuke vorliegen.

Die Glasübergangstemperatur T_{g} eines eingesetzten Kautschuks hat typischerweise einen Einfluss auf die Wärmeentwicklung bzw. Hysterese der entsprechenden Kautschukmischung und somit letztendlich auch auf den Rollwiderstand des gesamten Reifens. Bevorzugt ist eine erfindungsgemäße Kautschukmischung, vorzugsweise wie als bevorzugt beschrieben, wobei der eine oder mehr als eine von (a) verschiedene Dienkautschuk gemäß (b) jeweils eine individuelle Glasübergangstemperatur T_{g} in einem Bereich von -15 bis -120 °C aufweist, vorzugsweise von -20 bis -110 °C, weiter bevorzugt von -30 bis -100 °C, noch bevorzugter von -36 bis -93 °C, noch weiter bevorzugt von -41 bis -86 °C, am bevorzugtesten von -48 bis -78 °C, am weiter bevorzugtesten von -55 bis - 70 °C.

Im Kontext der vorliegenden Erfindung wird die Glasübergangstemperatur T_{g} der Polymere bzw. Kautschuke anhand von Dynamischer Differenz-Kalorimetrie bestimmt (DSC, engl. Dynamic Scanning Calorimetry, gemäß DIN 53765: 1994-03 bzw. ISO 11357-2: 1999-03, Kalibrierte DSC mit Tieftemperatureinrichtung, Kalibrierung nach Gerätetyp und Herstellerangaben, Probe im Aluminiumtiegel mit Aluminiumdeckel, Abkühlung auf Temperaturen niedriger als -120 °C mit 10 °C/min).

Wie bereits oben ausgeführt, umfasst die erfindungsgemäße Kautschukmischung gemäß (c) eine oder mehr als eine Verbindung der Formel (I). Es handelt sich dabei um ein Alterungsschutzmittel, insbesondere zur Eindämmung radikalischer Reaktionen, die zu Netzwerkschädigungen im vulkanisierten, d.h. Schwefel-vernetzten Kautschuk führen.

Bevorzugt ist eine erfindungsgemäße Kautschukmischung, vorzugsweise wie als bevorzugt beschrieben, wobei die eine oder mehr als eine Verbindung der Formel (I) in einer Gesamtmenge vorliegt im Bereich von 0,1 bis 10 phr, bevorzugt von 0,3 bis 8,5 phr, weiter bevorzugt von 0,5 bis 7 phr, besonders bevorzugt von 0,75 bis 5,5 phr, ganz besonders bevorzugt von 1 bis 4,5 phr.

Die Indizes m und n beschreiben die Anzahl der entsprechenden Gruppen R¹ und R². Sofern n gleich 0 (Null) ist, ist dieser Rest nicht vorhanden und stattdessen durch ein Wasserstoffatom ersetzt. Vorzugsweise ist R² optional. Der Index m hingegen ist mindestens 1. Somit ist der Rest R¹ nicht optional und mindestens immer einmal vorhanden.

Dem Fachmann ist ebenfalls klar, dass die Darstellung der Verknüpfungen von (R²)ₙ an die 4 möglichen Kohlenstoffe in dem entsprechenden 6-er Ring der Acridongrundstruktur bedeutet. Diese Gruppe ist maximal an jeder denkbaren Stelle im ihr zugeordneten Ring angeordnet.

Im Kontext der vorliegenden Erfindung ist die Gruppe (R¹) an der äußeren Cyclohexan-Gruppe und/oder, vorzugsweise und, der benachbarten Piperidin-Gruppe angebunden. Diese Gruppe ist mindestens einmal vorhanden, vorzugsweise mehrfach und teilt sich vorzugsweise auf beide cyclische Ringstrukturen auf. Vorzugsweise sind zwei R¹-Gruppen am selben Kohlenstoffatom angebunden; besonders bevorzugt sind diese, alternativ oder zusätzlich, identisch.
R¹ ist ausgewählt aus der Gruppe bestehend aus
xi) C₁- bis C₄-Alkyl-Resten und C₁- bis C₄-Alkoxy-Resten.

Im Kontext der vorliegenden Erfindung bedeutet die Bezeichnung "C₃- bis C₁₂-Reste" einen Rest umfassend 3 bis 12 Kohlenstoffatome. Andere Zahlen haben eine dazu entsprechende Bedeutung. Diese Erklärung gilt *mutatis mutandis* für z.B. für C₁- bis C₄-Alkyl-Reste bzw. C₁- bis C₄-Alkoxy-Reste.

Die Verbindung der Formel (I) weist eine hinreichende bis sehr gute Löslichkeit in Gummierungsmischungen auf, insbesondere zur Anwendung in Fahrzeugreifen. Die Löslichkeit wird vorzugsweise durch geeignete Auswahl der Reste R¹ und/oder R² weiter optimiert. Hierdurch wird ein ungewolltes Ausblühen dieser Verbindung geringgehalten oder sogar weitestgehend verhindert, was wiederum vorteilhaft für die Alterungsschutzwirkung ist. Je weniger an Alterungsschutzmittel ausblüht, desto weniger geht davon beabsichtigt oder unbeabsichtigt über die Oberfläche verloren und desto weniger Alterungsschutzmittel diffundiert wiederum nach. Dies hat auch erhebliche Vorteile für die Umwelt.

Im Kontext der vorliegenden Erfindung gilt grundsätzlich, dass Index n jeweils voneinander unabhängig ist. Das bedeutet zum Beispiel, dass das n in einer ersten Verbindung der Formel (I) unabhängig von einem n in einer zweiten Verbindung der Formel (I) ist. Dies gilt gleichermaßen für Index m. Dies gilt daher insbesondere, wenn mehr als zwei Verbindungen der Formel (I) vorliegen. Dieser Grundsatz findet außerdem Anwendung, wenn die Indizes n und/oder m innerhalb einer einzelnen Verbindung der Formel (I) größer 1 sind. Grundsätzlich gilt dies für die Reste R¹ und R² auch selbst.

In der erfindungsgemäßen Kautschukmischung, vorzugsweise wie als bevorzugt beschrieben, ist der Rest R² unabhängig voneinander ausgewählt aus der Gruppe bestehend aus aliphatischen C₁- bis C₁₂-Resten, aromatischen Resten, Halogen-Resten, Cyano-Resten, Ester-Resten, Keton-Resten, Ether-Resten und Thioether-Resten.

Bevorzugt ist eine erfindungsgemäße Kautschukmischung, vorzugsweise wie als bevorzugt beschrieben, wobei die aliphatischen C₁- bis C₁₂-Reste, vorzugsweise entsprechende Alkylreste, in R² unabhängig voneinander lineare Teilreste, verzweigte Teilreste und/oder cyclische Teilreste umfassen; vorzugsweise linear, verzweigt oder cyclisch sind.

Bevorzugt ist eine erfindungsgemäße Kautschukmischung, vorzugsweise wie als bevorzugt beschrieben, wobei die aliphatischen C₁- bis C₁₂-Reste in R² unabhängig voneinander gesättigt oder ungesättigt sind, vorzugsweise gesättigt. Besonders bevorzugt sind sie somit Alkylreste.

Bevorzugt ist eine erfindungsgemäße Kautschukmischung, vorzugsweise wie als bevorzugt beschrieben, wobei die aliphatischen Reste in R² aliphatische C₁- bis C₁₀-Reste sind, vorzugsweise aliphatische C₁- bis C₈-Reste, weiter bevorzugt aliphatische C₁- bis C₆-Reste, besonders bevorzugt aliphatische C₁- bis C₄-Reste, ganz besonders bevorzugt Methyl- und/oder Ethyl-Reste. Somit handelt es sich bei den genannten aliphatischen Resten vorzugsweise um entsprechende Alkylreste.

In einigen Fällen ist eine erfindungsgemäße Kautschukmischung bevorzugt, vorzugsweise wie als bevorzugt beschrieben, wobei die aliphatischen C₁- bis C₁₂-Reste in R² unabhängig voneinander einen oder mehr als einen Halogen-Substituenten umfassen, vorzugsweise ausgewählt aus der Gruppe bestehend aus Fluor, Chlor und Brom.

Bevorzugt ist eine erfindungsgemäße Kautschukmischung, vorzugsweise wie als bevorzugt beschrieben, wobei die aromatischen Reste in R² unabhängig voneinander 5 bis 20 Kohlenstoffatome umfassen, vorzugsweise 6 bis 15 Kohlenstoffatome, weiter bevorzugt 6 bis 12 Kohlenstoffatome, besonders bevorzugt 6 bis 10 Kohlenstoffatome, am bevorzugtesten 6 bis 8 Kohlenstoffatome.

Bevorzugt ist eine erfindungsgemäße Kautschukmischung, vorzugsweise wie als bevorzugt beschrieben, wobei die aromatischen Reste in R² unabhängig voneinander einen oder mehr als einen Halogen-Substituenten umfassen, vorzugsweise ausgewählt aus der Gruppe bestehend aus Fluor, Chlor und Brom.

Bevorzugt ist eine erfindungsgemäße Kautschukmischung, vorzugsweise wie als bevorzugt beschrieben, wobei die Halogen-Reste in R² unabhängig voneinander ausgewählt sind aus der Gruppe bestehend aus Fluor, Chlor und Brom.

Bevorzugt ist eine erfindungsgemäße Kautschukmischung, vorzugsweise wie als bevorzugt beschrieben, wobei die Ester-Reste, Keton-Reste, Ether-Reste und Thioether-Reste in R² unabhängig voneinander 1 bis 20 Kohlenstoffatome umfassen, vorzugsweise 1 bis 16 Kohlenstoffatome, weiter bevorzugt 1 bis 12 Kohlenstoffatome, besonders bevorzugt 1 bis 9 Kohlenstoffatome, weiter besonders bevorzugt 1 bis 7 Kohlenstoffatome, am bevorzugtesten 1 bis 5 Kohlenstoffatome. In einigen Fällen ist es bevorzugt, dass die vorstehenden Obergrenzen an Kohlenstoffatomen mit mindestens 2 Kohlenstoffatome als Untergrenze kombiniert sind.

Der oder die Reste R² sind besonders bevorzugt durch Auswahl geeigneter Ausgangsverbindungen bereits angebunden.

Bevorzugt ist eine erfindungsgemäße Kautschukmischung, vorzugsweise wie als bevorzugt beschrieben, wobei n und m unterschiedlich oder identisch sind, mit der Maßgabe, dass m nicht den Wert 0 (Null) annehmen kann. Die Anzahl und Art der Substituenten R¹ bzw. R² hat bei entsprechender Auswahl einen entscheidenden Einfluss auf die Löslichkeit der Verbindung innerhalb der erfindungsgemäßen Kautschukmischung.

In anderen Fällen ist eine erfindungsgemäße Kautschukmischung bevorzugt, vorzugsweise wie als bevorzugt beschrieben, wobei in der Verbindung gemäß Formel (I) n gleich 0 (Null) ist.

In einigen Fällen ist eine erfindungsgemäße Kautschukmischung bevorzugt, vorzugsweise wie als bevorzugt beschrieben, wobei in der Verbindung gemäß Formel (I) n gleich Null ist und m gleich 1 oder größer ist. Eine solche Verbindung weist in vielen Fällen eine sehr gute Löslichkeit in der erfindungsgemäßen Kautschukmischung auf und sorgt somit für einen adäquaten Alterungsschutz. Insbesondere wird damit das unerwünschte Ausblühen weiter gesenkt oder ganz verhindert.

Wie bereits oben erwähnt, ist in der Verbindung gemäß Formel (I) der Rest R¹ ausgewählt aus der Gruppe bestehend aus
- xi) C₁- bis C₄-Alkyl-Resten und C₁- bis C₄-Alkoxy-Resten.

Bevorzugt ist eine erfindungsgemäße Kautschukmischung, vorzugsweise wie als bevorzugt beschrieben, wobei die Reste gemäß xi) lineare Teilreste, verzweigte Teilreste und/oder cyclische Teilreste umfassen; vorzugsweise linear, verzweigt oder cyclisch sind.

Ganz besonders bevorzugt ist eine erfindungsgemäße Kautschukmischung, vorzugsweise wie als bevorzugt beschrieben, wobei in Formel (I) R¹ ausgewählt ist aus der Gruppe bestehend aus
C₁- bis C₃-Alkylresten, vorzugsweise C₁- bis C₂-Alkylresten, besonders bevorzugt Methyl-Resten;
und/oder
m eine ganze Zahl in einem Bereich von 1 bis 10 ist, vorzugsweise von 2 bis 8, besonders bevorzugt von 2 bis 6, ganz besonders bevorzugt von 3 bis 6, am bevorzugtesten von 3 bis 4.

Insbesondere bevorzugt ist eine erfindungsgemäße Kautschukmischung, vorzugsweise wie als bevorzugt beschrieben, wobei in Formel (I) m 2 oder größer ist, R¹ identisch ist und einen Methyl-Rest bedeutet, wobei mindestens zwei Methylreste an dasselbe Kohlenstoffatom gebunden sind.

Am bevorzugtesten ist eine erfindungsgemäße Kautschukmischung, vorzugsweise wie als bevorzugt beschrieben, wobei die Verbindung der Formel (I) gemäß (c) eine Struktur der Formel (II) aufweist

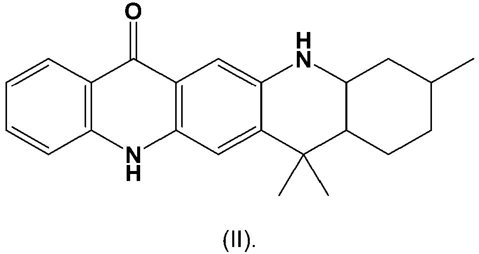

Ganz besonders bevorzugt ist eine erfindungsgemäße Kautschukmischung, vorzugsweise wie als bevorzugt beschrieben, wobei die eine oder mehr als eine Verbindung gemäß Formel (I), bevorzugte Formen dessen bzw. die Verbindung gemäß Formel (II), die einzigen Alterungsschutzmittel sind. Daher ist bevorzugt, dass Verbindungen der Formel (I), bevorzugte Formen dessen bzw. die Verbindung gemäß Formel (II), die einzigen Acridon-Verbindungen in der erfindungsgemäßen Kautschukmischung sind.

Besonders bevorzugt ist eine erfindungsgemäße Kautschukmischung, vorzugsweise wie als bevorzugt beschrieben, nicht umfassend eine Verbindung aus der Gruppe bestehend aus N-Phenyl-N'-(1,3-dimethylbutyl)-p-phenylendiamin (6PPD), N,N'-Diphenyl-p-phenylendiamin (DPPD), N-(1-phenylethyl)-N'-phenyl-p-phenylendiamin (SPPD), N,N'-Ditolyl-p-phenylendiamin (DTPD), N-(1,4-dimethylpentyl)-N'-phenyl-p-phenylendiamin (7PPD), und N-Isopropyl-N'-phenyl-p-phenylendiamin (IPPD); vorzugsweise nicht umfassend irgend ein Phenylendiamin. Solche Verbindungen sind typische konventionelle Alterungsschutzmittel, die im Kontext der vorliegenden Erfindung durch eine oder mehr als eine Verbindung der Formel (I) gemäß (c) ersetzt werden sollen.

Die erfindungsgemäße Kautschukmischung umfasst zudem gemäß (d) einen oder mehr als einen Füllstoff, vorzugsweise ausgewählt aus der Gruppe bestehend aus Kieselsäuren und Rußen. Im Kontext der vorliegenden Erfindung haben die Begriffe Kieselsäure und Silica den gleichen Bedeutungsumfang und sind daher synonym.

Bevorzugt ist eine erfindungsgemäße Kautschukmischung, vorzugsweise wie als bevorzugt beschrieben, wobei der eine oder mehr als eine Füllstoff gemäß (d) in einer Gesamtmenge (d.h. Gesamtfüllstoffmenge) im Bereich von 20 bis 90 phr vorliegt, vorzugsweise von 30 bis 85 phr, weiter bevorzugt von 40 bis 80 phr, besonders bevorzugt von 50 bis 75 phr, am bevorzugtesten von 52 bis 72 phr.

Bevorzugt ist eine erfindungsgemäße Kautschukmischung, vorzugsweise wie als bevorzugt beschrieben, wobei der eine oder mehr als eine Füllstoff gemäß (d) mindestens einen Ruß und/oder mindestens eine Kieselsäure umfasst. In einigen Fällen ist bevorzugt, dass als Füllstoff gemäß (d) entweder mindestens eine Kieselsäure oder mindestens ein Ruß vorliegt.

In einigen Fällen ist eine erfindungsgemäße Kautschukmischung bevorzugt, vorzugsweise wie als bevorzugt beschrieben, wobei der eine oder mehr als eine Füllstoff gemäß (d) mindestens einen Ruß und mindestens eine Kieselsäure umfasst, wobei, bezogen auf die Gesamtmenge an Füllstoff, vorzugsweise die Gesamtmenge an Kieselsäuren größer ist als die Gesamtmenge an Rußen, besonders vorzugsweise die Gesamtmenge an Kieselsäuren mindestens doppelt so groß ist wie die Gesamtmenge an Rußen, besonders bevorzugt mindestens vierfach so hoch, weiter bevorzugt mindestens sechsfach so hoch, insbesondere bevorzugt mindestens achtfach so hoch, am bevorzugtesten mindestens zehnfach so hoch, weiter am bevorzugtesten mindestens zwölffach so hoch.

Grundsätzlich ist in solchen Fällen bevorzugt, dass der Anteil der Gesamtmenge an Kieselsäuren an der Gesamtmenge des einen oder mehr als einen Füllstoffs gemäß (d) mehr als 50 Gew.-% beträgt, vorzugsweise 70 Gew.-% oder mehr, weiter vorzugsweise 80 Gew.-% oder mehr, am bevorzugtesten 90 Gew.-% oder mehr.

Vorzugsweise umfasst der eine oder mehr als eine Füllstoff gemäß (d) mindestens eine Kieselsäure in einer Gesamtmenge in einem Bereich von 15 bis 85 phr, wobei vorzugsweise die Gesamtmenge an Ruß in einem Bereich von 5 bis 10 phr liegt. Besonders bevorzugt umfasst der eine oder mehr als eine Füllstoff gemäß (d) mindestens eine Kieselsäure in einer Gesamtmenge in einem Bereich von 20 bis 90 phr, vorzugsweise von 30 bis 80 phr, weiter bevorzugt von 40 bis 75 phr, besonders bevorzugt von 50 bis 70 phr, am bevorzugtesten von 52 bis 67 phr, wobei die Gesamtmenge an Ruß in einem Bereich von 0 bis 20 phr liegt, vorzugsweise von 1 bis 15 phr, besonders bevorzugt von 2 bis 10 phr.

In anderen Fällen ist eine erfindungsgemäße Kautschukmischung bevorzugt, vorzugsweise wie als bevorzugt beschrieben, wobei der eine oder mehr als eine Füllstoff gemäß (d) mindestens einen Ruß und mindestens eine Kieselsäure umfasst, wobei, bezogen auf die Gesamtmenge an Füllstoff, vorzugsweise die Gesamtmenge an Rußen größer ist als die Gesamtmenge an Kieselsäuren, besonders vorzugsweise die Gesamtmenge an Rußen mindestens doppelt so groß ist wie die Gesamtmenge an Kieselsäuren, besonders bevorzugt mindestens vierfach so hoch, weiter bevorzugt mindestens sechsfach so hoch, insbesondere bevorzugt mindestens achtfach so hoch, am bevorzugtesten mindestens zehnfach so hoch, weiter am bevorzugtesten mindestens zwölffach so hoch. Vorzugsweise sind Ruße die einzigen Füllstoffe gemäß (d) in solchen Fällen.

Vorzugsweise umfasst in solchen Fällen der eine oder mehr als eine Füllstoff gemäß (d) mindestens einen Ruß in einer Gesamtmenge in einem Bereich von 15 bis 85 phr, wobei vorzugsweise die Gesamtmenge an Kieselsäuren in einem Bereich von 5 bis 10 phr liegt. Besonders bevorzugt umfasst der eine oder mehr als eine Füllstoff gemäß (d) mindestens einen Ruß in einer Gesamtmenge in einem Bereich von 20 bis 90 phr, vorzugsweise von 30 bis 80 phr, weiter bevorzugt von 40 bis 75 phr, besonders bevorzugt von 50 bis 70 phr, am bevorzugtesten von 52 bis 67 phr, wobei die Gesamtmenge an Kieselsäuren in einem Bereich von 0 bis 20 phr liegt, vorzugsweise von 1 bis 15 phr, besonders bevorzugt von 2 bis 10 phr.

Vorzugsweise ist die mindestens eine Kieselsäure als Füllstoff ausgewählt aus der Gruppe bestehend aus amorphen Siliziumdioxiden und pyrogenen Siliziumdioxiden. Ein besonders bevorzugtes amorphes Siliziumdioxid umfasst gefällte Kieselsäure, die typischerweise auch als gefälltes Siliziumdioxid bezeichnet wird.

Vorzugsweise weist die mindestens eine Kieselsäure eine Stickstoff-Oberfläche (BET-Oberfläche) (gemäß DIN ISO 9277 und DIN 66132) im Bereich von 35 bis 400 m²/g, bevorzugt von 50 bis 350 m²/g, besonders bevorzugt von 85 bis 320 m²/g, ganz besonders bevorzugt von 120 bis 235 m²/g, und/oder (vorzugsweise und) mit einer CTAB-Oberfläche (gemäß ASTM D 3765) im Bereich von 30 bis 400 m²/g, bevorzugt von 50 bis 330 m²/g, besonders bevorzugt von 80 bis 300 m²/g, ganz besonders bevorzugt von 115 bis 200 m²/g. In manchen Fällen besonders bevorzugte Kieselsäure sind solche des Typs Ultrasil^{®} VN3 (Handelsname) der Firma Evonik. Weiter bevorzugt sind zudem hoch-dispergierbare Kieselsäuren (sogenannte HD-Kieselsäuren). Bevorzugte hoch-dispergierbare Kieselsäuren umfassen Zeosil^{®} 1165 MP der Firma Solvay und Ultrasil 7000 der Firma Evonik. Andere Kieselsäuren mit vergleichsweise niedrigeren BET-Oberflächen sind alternativ bevorzugt, beispielsweise Zeosil^{®} 1115 oder Zeosil^{®} 1085 der Firma Solvay. Im Kontext der vorliegenden Erfindung sind ebenfalls Kieselsäuren umfasst, die aus dem Rückstand der Verbrennung von Reisschalen gewonnen werden. Solche aus Reisschalen gewonnenen Kieselsäuren sind insbesondere in Kombination mit den unten genannten konkreten erfindungsgemäßen Beispielen besonders bevorzugt.

Als Ruß kommen grundsätzlich alle dem Fachmann bekannten Rußtypen in Frage. Bevorzugt ist der mindestens eine Ruß ausgewählt aus der Gruppe bestehend aus Industrierußen und Pyrolyse-Rußen, wobei Industrieruße bevorzugt sind.

Bevorzugt hat der mindestens eine Ruß eine Jodzahl, gemäß ASTM D 1510 (die auch als Jodadsorptionszahl bezeichnet wird), in einem Bereich von 15 bis 130 g/kg, bevorzugt von 20 bis 120 g/kg, besonders bevorzugt von 25 bis 110 g/kg, und ganz besonders bevorzugt von 30 bis 100 g/kg, und/oder eine DBP-Zahl, gemäß ASTM D 2414, in einem Bereich von 60 bis 180 ml/100 g, bevorzugt von 65 bis 150 ml/100 g, besonders bevorzugt von 70 bis 120 ml/100 g. Die DBP-Zahl gemäß ASTM D 2414 bestimmt das spezifische Absorptionsvolumen eines Rußes oder eines hellen Füllstoffes mittels Dibutylphthalat. Die Verwendung solcher Ruße in der erfindungsgemäßen Kautschukmischung liefert typischerweise sehr gute Ergebnisse. Ganz besonders bevorzugt ist ein Ruß des Typs N660, N220, N234, N326, N330, N339, N358, N550, N772, und/oder N784. Weiter bevorzugt weist der Ruß eine CTAB-Oberfläche (gemäß ASTM D 3765) im Bereich von 15 bis 160 m²/g, bevorzugt von 20 bis 120 m²/g, besonders bevorzugt von 25 bis 100 m²/g, ganz besonders bevorzugt von 30 bis 90 m²/g.

In einigen Fällen ist eine erfindungsgemäße Kautschukmischung bevorzugt, vorzugsweise wie als bevorzugt beschrieben, wobei der mindestens eine Ruß als Begleitmaterial eines anderen Mischungsbestandteils (vorzugsweise einer Silanverbindung) in vergleichsweise geringen Mengen eingetragen wird, vorzugsweise in einer Gesamtmenge von 10 phr oder geringer.

Im Kontext der vorliegenden Erfindung gehört Zinkoxid nicht zu den Füllstoffen im Sinne der vorliegenden Erfindung, sondern zu bevorzugten weiteren Zusatzstoffen (siehe Text weiter unten zu weiteren Zusatzstoffen).

Die erfindungsgemäße Kautschukmischung umfasst zusätzlich (e) mindestens ein Methylen-Donor / Methylen-Akzeptor Reaktionspaar, Vorkondensate und/oder Harze daraus.

Bevorzugt ist eine erfindungsgemäße Kautschukmischung, vorzugsweise wie als bevorzugt beschrieben, wobei gemäß (e) das Reaktionspaar, die Vorkondensate und/oder die Harze daraus Formaldehyd, Hexamethylentetramin (HMTA), Hexamethoxymethylmelamin (HMMM), Resorcin, substituierte Resorcine, Phenol, substituierte Phenole, **N-**Methyldioxazinane und/oder Aceton umfassen bzw. darauf basieren. Dies umfasst, dass das Reaktionspaar, die Vorkondensate bzw. die Harze daraus aus den vorgenannten Verbindungen eine, zwei, oder mehr als zwei umfassen bzw. darauf basieren.

Im Kontext der vorliegenden Erfindung bedeutet "darauf basieren", dass sie aus den zuvor genannten Verbindungen (auch als Monomere bezeichnet) gebildet werden bzw. daraus aufgebaut sind oder zumindest überwiegend daraus gebildet bzw. aufgebaut sind. Es sind somit beispielsweise auch solche Vorkondensate umfasst, die weitestgehend aus kondensierten Phenolen aufgebaut sind aber zusätzlich mit einem Substituenten (z.B. endständig) versehen sind, der vorstehend nicht aufgezählt ist.

Im Kontext der vorliegenden Erfindung wird Resorcin (d.h. 1,3-Dihydroxybenzol) nicht als ein substituiertes Phenol aufgefasst, sondern wird aufgrund seiner besonderen Bedeutung in Gummierungsmischungen in obiger Liste separat aufgeführt.

Bevorzugt ist eine erfindungsgemäße Kautschukmischung, vorzugsweise wie als bevorzugt beschrieben, wobei
die substituierten Resorcine und/oder die substituierten Phenole unabhängig voneinander mono-Ester, mono-Ether, di-Ester und/oder di-Ether dessen umfassen.

Besonders bevorzugt ist eine erfindungsgemäße Kautschukmischung, vorzugsweise wie als bevorzugt beschrieben, wobei
die substituierten Resorcine Resorcinmonoacetat, Resorcinmonobenzoat, Resorcinmonorosinat, Resorcindiphenylether, Resorcinmonomethylether und/oder Benzoylresorcin umfassen
und/oder
die substituierten Phenole 1,2-Dihydroxybenzol (Brenzcatechin), 1,4-Dihydroxybenzol (Hydrochinon), 1,2,3-Trihydroxybenzol (Pyrogallol), 1,2,4-Trihydroxybenzol (Hydroxyhydrochinon), 1,3,5-Trihydroxybenzol (Phloroglucin), 2-Methylphenol (ortho-Kresol), 3-Methylphenol (meta-Kresol), 4-Methylphenol *(para-*Kresol), 1,2-Hydroxybenzolcarbamate, 1,3-Hydroxybenzolcarbamate, 1,4-Hydroxybenzolcarbamate, Hydroxydiphenylamin (HDPA) und/oder **N-**(Hydroxyphenyl)maleimid umfassen.

Bevorzugt ist eine erfindungsgemäße Kautschukmischung, vorzugsweise wie als bevorzugt beschrieben, wobei gemäß (e) das Reaktionspaar, die Vorkondensate und/oder die Harze daraus ein Novolak und/oder ein Alnovol^{®} umfasst. Dabei handelt es sich im Kontext der vorliegenden Erfindung um besonders bevorzugte Vorkondensate. Novolak bildet eine Gruppe von Vorkondensaten, die auf Formaldehyd und Phenolen (insbesondere substituierte Phenole) basieren bzw. daraus aufgebaut sind und dabei ein Formaldehyd-Phenol-Verhältnis kleiner 1:1 ausbilden. Sie werden durch saure Kondensation der Edukte erhalten. Besonders bevorzugte substituierte Phenole umfassen dabei Kresole, vorzugsweise *meta-* und/oder para-Kresol. Ein Novolak selbst weist vorzugsweise äußerst geringe Restmengen freies Formaldehyd auf. Alnovol^{®} bildet eine Gruppe von Vorkondensaten, die auf Formaldehyd und Phenol basieren bzw. daraus aufgebaut sind und zusätzlich einen Substituenten umfassen, vorzugsweise über Methylengruppen angebundene Carbamat-Gruppen. Auch ein Alvonol weist vorzugsweise äußerst geringe Restmengen freies Formaldehyd auf.

Besonders bevorzugt ist eine erfindungsgemäße Kautschukmischung, vorzugsweise wie als bevorzugt beschrieben, wobei gemäß (e) das Reaktionspaar, die Vorkondensate und/oder die Harze daraus Formaldehyd, Hexamethylentetramin (HMTA), Hexamethoxymethylmelamin (HMMM), Phenol, substituierte Phenole und/oder Resorcin, umfassen bzw. darauf basieren. Am bevorzugtesten umfasst (e), vorzugsweise besteht daraus, ein Reaktionspaar umfassend Hexamethoxymethylmelamin (HMMM) und Resorcin, Vorkondensate bzw. Harze daraus.

Dem Fachmann ist dabei klar, dass Formaldehyd typischerweise aus entsprechenden Formaldehyd-Spendern im Zuge der Reaktion freigesetzt wird (d.h. *in-situ* Erzeugung); vorzugsweise in einer stöchiometrisch äquivalenten Gesamtmenge.

Im Kontext der vorliegenden Erfindung ist Formaldehyd, Hexamethylentetramin (HMTA) und Hexamethoxymethylmelamin (HMMM) vorzugsweise ein Methylen-Donor, wohingegen Resorcin, substituierte Resorcine, Phenol, substituierte Phenole vorzugsweise ein Methylen-Akzeptor sind. In einigen Fällen sind die Verbindungen sowohl Donor als auch Akzeptor, beispielsweise Hexamethoxymethylmelamin (HMMM). In den meisten Fällen ist es jedoch bevorzugt, dass das mindestens eine Methylen-Donor / Methylen-Akzeptor Reaktionspaar, die Vorkondensate und/oder die Harze daraus auf zwei oder mehr als zwei verschiedenen Verbindungen beruhen.

Bevorzugt ist eine erfindungsgemäße Kautschukmischung, vorzugsweise wie als bevorzugt beschrieben, wobei Bestandteil (e) in einer Gesamtmenge in einem Bereich von 1 bis 17 phr vorliegen, vorzugsweise von 2 bis 14 phr, weiter bevorzugt von 3 bis 11, am bevorzugtesten von 3,5 bis 9 phr.

Bevorzugt ist eine erfindungsgemäße Kautschukmischung, vorzugsweise wie als bevorzugt beschrieben, wobei Bestandteil (e)
einen oder mehr als einen Methylen-Donor in einer Gesamtteilmenge, d.h. als Teilmenge der Gesamtmenge (e), in einem Bereich von 0,5 bis 10 phr aufweist, vorzugsweise von 1 bis 8 phr, weiter bevorzugt von 1,5 bis 6 phr, am bevorzugtesten von 2 bis 5 phr,
   und
einen oder mehr als einen Methylen-Akzeptor in einer Gesamtteilmenge, d.h. als Teilmenge der Gesamtmenge (e), in einem Bereich von 0,5 bis 7 phr, vorzugsweise von 1 bis 6 phr, weiter bevorzugt von 1,5 bis 5 phr, am bevorzugtesten von 2 bis 4 phr. Insbesondere in Verbindung mit einem metallischen Festigkeitsträger bildet die Kombination der Bestandteile (e) und (f) ein bevorzugtes System zur Haftverbesserung.

Die erfindungsgemäße Kautschukmischung umfasst zudem vorzugsweise
(g) einen oder mehr als einen Weichmacher.

Bevorzugt ist eine erfindungsgemäße Kautschukmischung, vorzugsweise wie als bevorzugt beschrieben, wobei der eine oder mehr als eine Weichmacher gemäß (g) ausgewählt ist aus der Gruppe bestehend aus Ölen und Harzen. Bevorzugte Öle umfassen Mineralöle und/oder Pflanzenöle, wobei Pflanzenöle besonders bevorzugt sind. In einigen Fällen umfasst ein besonders bevorzugtes Pflanzenöl Rapsöl. Pflanzenöle umfassen typischerweise Triglyceride. Bevorzugte Mineralöle umfassen aromatische, naphthenische und/oder paraffinische Mineralöle. Insbesondere bevorzugte Mineralöle umfassen MES (mild extraction solvate), DAE (Destillated Aromatic Extracts), RAE (Residual Aromatic Extract), TDAE (treated distillate aromatic extract), und Rubber-to-Liquid-Öle (RTL). In einigen Fällen ist besonders bevorzugt eine Kombination aus einem oder mehr als einem Mineralöl und einem oder mehr als einem Pflanzenöl.

Bevorzugt ist eine erfindungsgemäße Kautschukmischung, vorzugsweise wie vorstehend und/oder nachstehend als bevorzugt beschrieben, wobei der eine oder mehr als eine Weichmacher gemäß (g) in der Kautschukmischung in einer Gesamtmenge im Bereich von 1 bis 30 phr vorliegt, bevorzugt von 1,5 bis 22 phr, besonders bevorzugt von 2 bis 15 phr, ganz besonders bevorzugt von 2,5 bis 10 phr, am bevorzugtesten von 3 bis 6 phr. Bevorzugte Harze umfassen Kohlenwasserstoffharze oder natürliche Harze. Besonders bevorzugt umfassen die Harze eines aus der Gruppe bestehend aus AMS Harzen, Terpenharzen, Phenolharzen, Cumaron-Inden-Harzen, aliphatischen Kohlenwasserstoffharzen, aromatischen Kohlenwasserstoffharzen und natürlichen Harzen. Sofern Harze als Bestandteil der Weichmacher eingesetzt werden, liegt deren Gesamtmenge in einem Bereich von 0,5 bis 4 phr. Ein solcher vergleichsweise geringer Harzanteil wirkt sich in einigen Fällen vorteilhaft auf die Rissbeständigkeit aus und beeinflusst in erster Linie in vorteilhafter Weise die Klebrigkeit.

Bevorzugt ist eine erfindungsgemäße Kautschukmischung, vorzugsweise wie als bevorzugt beschrieben, umfassend einen oder mehr als einen weiteren Zusatzstoff. Hierbei handelt es sich vorzugsweise um übliche Zusatzstoffe in den typischen Mengen, die bei der Herstellung einer entsprechenden Kautschukmischung vorzugsweise in wenigstens eine Grundmischstufe zugegeben werden.

Vorzugsweise umfasst der eine oder mehr als eine weitere Zusatzstoff:
i) sekundäre Alterungsschutzmittel, die keine Verbindung der Formel (I) sind (bzw. kein Bestandteil der Komponente gemäß (c)), vorzugsweise umfassend Dihydrochinoline; besonders bevorzugt 2,2,4-Trimethyl-1,2-dihydrochinolin (TMQ); dies ist jedoch keineswegs bevorzugt. Vorzugsweise umfasst die erfindungsgemäße Kautschukmischung, vorzugsweise wie als bevorzugt beschrieben, kein TMQ, vorzugsweise keine Dihydrochinoline, besonders bevorzugt überhaupt keine von (c) verschiedenen Alterungsschutzmittel.
ii) einen Aktivator; vorzugsweise umfassend Zinkverbindungen (inklusive Zinkkomplexe) und/oder Fettsäuren; besonders bevorzugt umfassend Zinkoxid, Stearinsäure und/oder Zinkethylhexanoat;
iii) Agenzien für die Anbindung von Füllstoffen (insbesondere für Ruße und Kieselsäuren); vorzugsweise umfassend S-(3-Aminopropyl)-Thioschwefelsäure, deren Metallsalze (besonders für die Anbindung an Ruß) und/oder Silan-Kupplungsagenzien (besonders für die Anbindung an Siliciumdioxid, insbesondere an Kieselsäure);
iv) Ozonschutzwachse;
v) Harze, vorzugsweise Klebharze, die keine Weichmacherharze sind;
vi) Mastikationshilfsmittel; vorzugsweise umfassend 2,2'-Dibenzamidodiphenyldisulfid (DBD); und/oder
vii) Prozesshilfsmittel; vorzugsweise umfassend Fettsäureester und/oder Metallseifen, wobei bevorzugte Metallseifen Zinkseifen und/oder Calciumseifen umfassen.

Bevorzugt ist eine erfindungsgemäße Kautschukmischung, vorzugsweise wie als bevorzugt beschrieben, wobei der eine oder mehr als eine weitere Zusatzstoff in einer Gesamtmenge im Bereich von 1 bis 150 phr umfasst ist, bevorzugt von 2 bis 100 phr, weiter bevorzugt von 5 bis 80 phr, am bevorzugtesten von 7 bis 60 phr.

Bei den Silan-Kupplungsagenzien (siehe iii) oben) handelt es sich vorzugsweise um alle dem Fachmann bekannten Typen. Vorzugsweise umfasst die erfindungsgemäße Kautschukmischung, vorzugsweise wie als bevorzugt beschrieben, ein oder mehr als ein Silan-Kupplungsagenz. In manchen Fällen umfasst die erfindungsgemäße Kautschukmischung vorzugsweise ein Gemisch verschiedener Silan-Kupplungsagenzien. Der Einsatz von Silan-Kupplungsagenzien ist daher insbesondere bevorzugt, sofern als Füllstoff mindestens eine Kieselsäure eingesetzt wird.

Silan-Kupplungsagenzien reagieren mit den oberflächlichen Silanolgruppen des Siliciumdioxids (insbesondere der Kieselsäure) oder anderen polaren Gruppen, entweder während des Mischens des Kautschuks bzw. der Kautschukmischung *(in-situ)* oder bereits vor der Zugabe dessen zum Kautschuk während einer Vorbehandlung (Vormodifizierung).

Bevorzugte Silan-Kupplungsagenzien umfassen bifunktionale Organosilane, die am Siliciumatom mindestens eine Alkoxy-, Cycloalkoxy- oder Phenoxygruppe als Abgangsgruppe besitzen und als zusätzliche Funktionalität eine Gruppe aufweisen, die (gegebenenfalls nach Spaltung) eine chemische Reaktion mit den Doppelbindungen des Polymers eingehen kann. Bevorzugte Gruppen umfassen -SCN, -SH, -NH₂ und/oder -Sₓ-(mit x = 2 bis 8). Silan-Kupplungsagenzien mit einer -SH Gruppe werden typischerweise auch als Mercaptosilane bezeichnet. Bevorzugte Mercaptosilane umfassen geblockte Mercaptosilane, vorzugsweise gemäß WO 99/09036 A1. Der Einsatz solcher Mercaptosilane als Kupplungsagenzien sind im Kontext der vorliegenden Erfindung besonders bevorzugt und daher vorzugsweise in der erfindungsgemäßen Kautschukmischung enthalten. Diese liegen entweder in freier Form vor oder bereits mit Anbindung an den Kieselsäure-Füllstoff (Vormodifizierung), vorzugsweise in freier Form. Weiter bevorzugt ist eine erfindungsgemäße Kautschukmischung, vorzugsweise wie als bevorzugt beschrieben, umfassend ein geblocktes Mercaptosilan, vorzugsweise ein geblocktes Mercaptosilan umfassend einen Alkanoylrest, besonders bevorzugt ein geblocktes Mercaptosilan umfassend einen Octanoylrest. Bevorzugte Alkanoylreste umfassen 2 bis 12 Kohlenstoffatome, vorzugsweise 4 bis 10, besonders bevorzugt 6 bis 9. Besonders bevorzugte Silan-Kupplungsagenzien umfassen 3-Mercaptopropyltriethoxysilan, 3-Thiocyanato-propyltrimethoxysilan, 3,3'-Bis(triethoxysilylpropyl)polysulfide mit 2 bis 8 Schwefelatomen (besonders bevorzugt 3,3'-Bis(triethoxysilylpropyl)tetrasulfid (TESPT) und/oder dessen Disulfid (TESPD)) und/oder Gemische der Sulfide mit vorzugsweise jeweils unterschiedlicher Anzahl an Schwefelatomen. In einigen Fällen ist TESPT bevorzugt, besonders bevorzugt als Gemisch mit Industrieruß (Handelsname X50S^{®} der Firma Evonik).

Bevorzugte Silan-Kupplungsagenzien umfassen, zusätzlich oder alternativ, auch solche gemäß WO 2008/083241 A1, WO 2008/083242 A1, WO 2008/083243 A1 und/oder WO 2008/083244 A1. Weitere bevorzugte Silan-Kupplungsagenzien, zusätzlich oder alternativ, umfassen unter dem Namen NXT in verschiedenen Varianten von der Firma Momentive, USA, vertriebene Silane (vorzugsweise 3-Octanoylthio-1-propyltriethoxysilan) und/oder unter dem Namen VP Si 363^{®} von der Firma Evonik Industries vertriebene Silane.

Bevorzugt ist eine erfindungsgemäße Kautschukmischung, vorzugsweise wie als bevorzugt beschrieben, wobei das eine oder mehr als eine Silan-Kupplungsagenz in einer Gesamtmenge im Bereich von 1 bis 50 phf (Gewichtsteile, bezogen auf 100 Gewichtsteile Kieselsäure) umfasst ist, bevorzugt von 2 bis 40 phf, weiter bevorzugt von 3 bis 30 phf, noch weiter bevorzugt von 4 bis 20 phf, am bevorzugtesten von 5 bis 18 phf. Die hier verwendete Angabe phf (parts per hundred parts of filler by weight) ist dabei die in der Kautschukindustrie gebräuchliche Mengenangabe für Kupplungsagenzien für Füllstoffe. Im Kontext der vorliegenden Erfindung bezieht sich phf auf die Gesamtmenge an Kieselsäure als Füllstoff, das heißt, dass andere eventuell vorhandene Füllstoffe wie Ruß nicht in der Berechnung berücksichtigt werden.

Bevorzugt ist eine erfindungsgemäße Kautschukmischung, vorzugsweise wie als bevorzugt beschrieben, umfassend einen oder mehr als einen Aktivator (siehe ii) oben); vorzugsweise eine Zinkverbindung, besonders bevorzugt Zinkoxid. Hinsichtlich der Typen an Zinkoxid gibt es vorzugsweise keine Einschränkung. Bevorzugt ist ein Granulat und/oder ein Pulver. Bevorzugt besitzt das Zinkoxid eine BET-Oberfläche bis zu 100 m²/g, vorzugsweise in einem Bereich von 1 bis 100 m²/g. In einigen Fällen ist ein Zinkoxid bevorzugt, wobei die BET-Oberfläche kleiner 10 m²/g ist. In anderen Fällen ist ein Zinkoxid bevorzugt, wobei die BET-Oberfläche im Bereich von 10 bis 100 m²/g liegt, besonders bevorzugt sind sogenannte "nano-Zinkoxide". Vorzugsweise liegt der eine oder mehr als eine Aktivator, insbesondere bevorzugt die Zinkverbindung, in einer Gesamtmenge vor in einem Bereich von 1 bis 15 phr, vorzugsweise von 2 bis 12 phr, am bevorzugtesten von 4 bis 10 phr.

Die erfindungsgemäße Kautschukmischung ist schwefelvernetzbar, d.h. vulkanisierbar, wobei im Kontext der vorliegenden Erfindung beide Begriffe bedeutungsgleich und somit synonym sind. In Kombination mit einem Festigkeitsträger ist die erfindungsgemäße Kautschukmischung vorzugsweise vulkanisiert oder zumindest teilvulkanisiert, vorzugsweise vulkanisiert. Dies bedeutet, dass sie vorzugsweise vulkanisiert oder mindestens teilvulkanisiert zur Anwendung kommt, besonders bevorzugt als Gummierung für einen oder mehr als einen Festigkeitsträger in einem Fahrzeugreifen bzw. Fahrzeugluftreifen. Dem Fachmann ist jedoch selbstverständlich klar, dass bis zur maßgeblichen Verarbeitung bzw. Verwendung die Kautschukmischung typischerweise nicht vulkanisiert vorliegt.

Die Vulkanisation bzw. das Vulkanisieren der erfindungsgemäßen Kautschukmischung erfolgt bevorzugt in Anwesenheit von Schwefel und/oder Schwefelspendern, vorzugsweise unter Mitwirkung von Vulkanisationsbeschleunigern, wobei vorzugsweise einige Vulkanisationsbeschleuniger zugleich Schwefelspender sind.

Bevorzugt ist eine erfindungsgemäße Kautschukmischung, vorzugsweise wie als bevorzugt beschrieben, zusätzlich umfassend
(h) Schwefel und/oder einen oder mehr als einen Schwefelspender.

Hinsichtlich der Schwefelspender gibt es keine besondere Einschränkung, so dass grundsätzlich alle für den Fachmann bekannten Schwefelspender in Betracht kommen, solange sie unter den vorliegenden Bedingungen Schwefel in entsprechender Form zur Verfügung stellen. Der eine oder mehr als eine Schwefelspender ist vorzugsweise ausgewählt aus der Gruppe bestehend aus Thiuramdisulfiden, Thiuramtetrasulfiden, Dithiophosphaten, und Polysulfiden. Bevorzugte Thiuramdisulfide umfassen Tetrabenzylthiuramdisulfid (TBzTD), Tetramethylthiuramdisulfid (TMTD) und/oder Tetraethylthiuramdisulfid (TETD). Bevorzugte Thiuramtetrasulfide umfassen Dipentamethylenthiuramtetrasulfid (DPTT). Bevorzugte Dithiophosphate umfassen Bis(diisopropyl)thiophosphoryldisulfid (DIPDIS), Zinkdichloryldithiophosphat, und/oder Zinkalkyldithiophosphat. Bevorzugte Polysulfide umfassen Bis(O,O-2-ethylhexyl-thiophosphoryl)polysulfid, Diarylpolysulfide und/oder Dialkylpolysulfide.

Bevorzugt ist eine erfindungsgemäße Kautschukmischung, vorzugsweise wie als bevorzugt beschrieben, wobei der Schwefel und der eine oder mehr als eine Schwefelspender in einer Gesamtmenge in einem Bereich von 0,1 bis 7 phr vorliegt, vorzugsweise von 1 bis 6 phr. Sofern der Festigkeitsträger ein metallischer Festigkeitsträger ist, wird vorzugsweise innerhalb dieser Bereiche ein vergleichsweise hoher Schwefelgehalt eingesetzt. Besonders bevorzugt ist in solch einem Fall eine Gesamtmenge in einem Bereich von 2,1 bis 7 phr, vorzugsweise von 2,5 bis 6,5 phr, weiter bevorzugt von 3 bis 6 phr, am bevorzugtesten von 3,5 bis 5,5 phr. Sofern der Festigkeitsträger ein textiler Festigkeitsträger ist, wird vorzugsweise innerhalb der oben genannten breiten Bereiche ein vergleichsweise niedriger Schwefelgehalt eingesetzt. Besonders bevorzugt ist in solche einem Fall eine Gesamtmenge in einem Bereich von 0,1 bis 5 phr, vorzugsweise von 0,75 bis 4,5 phr, weiter bevorzugt von 1 bis 4 phr, am bevorzugtesten von 1,5 bis 3,4 phr.

Bevorzugt ist eine erfindungsgemäße Kautschukmischung, vorzugsweise wie als bevorzugt beschrieben, umfassend (alternativ oder zusätzlich zu einem Schwefelspender) einen oder mehr als einen Vulkanisationsbeschleuniger.

Bevorzugte Vulkanisationsbeschleuniger umfassen Thiazolbeschleuniger, Mercaptobeschleuniger, Sulfenamidbeschleuniger, Thiocarbamatbeschleuniger, Thiurambeschleuniger, Thiophosphatbeschleuniger, Thioharnstoffbeschleuniger, Xanthogenat-Beschleuniger, Guanidin-Beschleuniger, und/oder Kombinationen daraus. Besonders bevorzugt sind Sulfenamidbeschleuniger, insbesondere Thiazolsulfenamidbeschleuniger, und Guanidin-Beschleuniger. Besonders bevorzugt ist ein oder mehr als ein Beschleuniger ausgewählt aus der Gruppe bestehend aus N-Cyclohexyl-2-benzothiazolsulfenamid (CBS), N,N-Dicyclohexylbenzothiazol-2-sulfenamid (DCBS), N-tert-butyl-2-benzothiazole sulfenimide (TBSI), Benzothiazyl-2-sulfenmorpholid (MBS), N-tert-Butyl-2-benzothiazylsulfenamid (TBBS) und Diphenylguanidin (DPG).

Bevorzugt ist eine erfindungsgemäße Kautschukmischung, vorzugsweise wie als bevorzugt beschrieben, umfassend einen oder mehr als einen Vulkanisationsverzögerer. Die Anwesenheit eines Vulkanisationsverzögerers trägt beispielsweise zu einem besser ausbalancierten Vulkanisationsverlauf bei.

Die erfindungsgemäße Kautschukmischung wird vorzugsweise hergestellt oder bereitgestellt, besonders bevorzugt hergestellt. Dies erfolgt vorzugsweise nach in der Kautschukindustrie üblichen Verfahren, bei denen zunächst in einer oder mehr als einer Mischstufe eine Grundmischung mit allen Bestandteilen außer (d.h. abzüglich) dem Vulkanisationssystem bereitgestellt wird, wobei das Vulkanisationssystem den Schwefel und die vulkanisationsbeeinflussenden Verbindungen umfasst, d.h. vorzugsweise die Gesamtmenge aus Schwefel, Schwefelspender, Vulkanisationsbeschleuniger und Vulkanisationsverzögerer. Durch Zugabe des Vulkanisationssystems in einer letzten Mischstufe wird eine Fertigmischung erzeugt, welche vorzugsweise durch Extrusion und/oder Kalandrieren weiterverarbeitet und in die gewünschte Form gebracht wird. Die dabei erzielte Form entscheidet vorzugsweise über die anschließende Verwendung, wie z.B. zur Gummierung von Festigkeitsträgern für einen Fahrzeugreifen bzw. Fahrzeugluftreifen.

Die vorliegende Erfindung betrifft zudem einen Festigkeitsträger gummiert mit einer erfindungsgemäßen, aber bereits schwefelvernetzten Kautschukmischung wie vorstehend beschrieben, vorzugsweise wie vorstehend als bevorzugt beschrieben, so dass ein gummierter Festigkeitsträger resultiert.

Das vorstehend Gesagte zu der erfindungsgemäßen Kautschukmischung, jeweils inklusive bevorzugter Ausgestaltungen, gilt vorzugsweise *mutatis mutandis* auch für den erfindungsgemäßen Festigkeitsträger.

Vorzugsweise umfasst der Festigkeitsträger Filamente, Fasern, Gewebe und/oder Corde.

Besonders bevorzugt ist eine erfindungsgemäßer Festigkeitsträger, wobei der Festigkeitsträger ein textiler Festigkeitsträger, ein metallischer Festigkeitsträger, oder ein Komposit aus einem textilen und metallischen Festigkeitsträger ist.

In einigen Fällen ist ein erfindungsgemäßer Festigkeitsträger bevorzugt, wobei der textile Festigkeitsträger einer oder mehr als einer ausgewählt ist aus der Gruppe bestehend aus Nylon, Rayon, Polyester, und Aramid. Typischerweise werden Festigkeitsträger, die zwei oder mehr textile Festigkeitsträger umfassen, als Hybridkorde bezeichnet.

In anderen Fällen ist ein erfindungsgemäßer Festigkeitsträger bevorzugt, wobei der metallische Festigkeitsträger ein mit einer Legierung beschichteter oder unbeschichteter Stahlfestigkeitsträger ist. Vorzugsweise ist die Legierung eine Messinglegierung.

Die vorliegende Erfindung betrifft zudem einen Fahrzeugreifen, vorzugsweise einen Fahrzeugluftreifen, der mindestens einen erfindungsgemäßen Festigkeitsträger (wie vorstehend beschrieben, vorzugsweise wie vorstehend als bevorzugt beschrieben) in wenigstens einem Bauteil aufweist, wobei das Bauteil vorzugsweise eine Karkasse, ein Gürtel, und/oder eine Gürtelbandage ist.

Das vorstehend Gesagte zu der erfindungsgemäßen Kautschukmischung bzw. dem erfindungsgemäßen Festigkeitsträger, jeweils inklusive bevorzugter Ausgestaltungen, gilt vorzugsweise *mutatis mutandis* auch für den erfindungsgemäßen Fahrzeugreifen.

Vorzugsweise handelt es sich in vielen Fällen bei dem Bauteil daher um ein inneres Bauteil des erfindungsgemäßen Reifens.

Vorzugsweise ist der erfindungsgemäße Fahrzeugreifen vulkanisiert, d.h. kein Fahrzeugreifenrohling.

Vorzugsweise ist der erfindungsgemäße Fahrzeugreifen, vorzugsweise wie als bevorzugt beschrieben, ausgewählt aus der Gruppe bestehend aus Industrie- und Baustellenfahrzeugreifen, LKW-, PKW-, Van- und Zweiradreifen.

Besonders bevorzugt ist ein erfindungsgemäßer Fahrzeugreifen, vorzugsweise wie als bevorzugt beschrieben, der die erfindungsgemäße Kautschukmischung für alle Festigkeitsträger aufweist.

Nachfolgend wird die Erfindung durch Ausführungsbeispiele näher erläutert.

Die Verbindung gemäß Formel (II), als beispielhafte Ausgestaltung einer Verbindung gemäß Formel (I), wurde gemäß WO 2023/143677 A1, "Synthese von 3,14,14-trimethyl-2,3,4,4a,5,12,14,14a-octahydroquinolino[2,3-b]acridin-7(1H)-one" bereitgestellt.

Die erfindungsgemäße Kautschukmischung wurde mit dieser Verbindung auf eine für den Fachmann bekannte Weise bereitgestellt. Die sich ergebenden erfindungsgemäßen Beispiele sind mit "E" gekennzeichnet; Vergleichsversuche mit "V". Für die experimentelle Auswertung wurden Prüfkörper in Form einer Scheibe (Durchmesser 6 cm, 6 mm Dicke; zur Präparation von unter anderem Zugversuchen) erstellt, welche nach Formgebung bei einer Temperatur von 160°C vulkanisiert wurden.

Die Prüfkörper wurden nach der Vulkanisation in zwei Gruppen geteilt. Eine Gruppe Prüfkörper wurde zur Alterung für 28 Tage bei konstant 70°C in einem Wärmeschrank gealtert. Die andere Gruppe Prüfkörper wurde für weitere Labormessung im ungealterten Zustand unmittelbar verwendet, während die gealterten Prüfkörper der ersten Gruppe erst nach deren Alterung vermessen wurden.

Als Vergleich dienen insbesondere Kautschukmischungen, die als Alterungsschutzmittel das typischerweise eingesetzte 6PPD enthalten. Die Mischungen sind nachfolgend in Tabelle 1 zusammengefasst und eigenen sich insbesondere für die Gummierung von Stahlfestigkeitsträgern.

**Tabelle 1, Kautschukmischungen, alle Angaben in phr sowie Ergebnisse**

| **Bestandteil** | **V1** | **V2** | **V3** | **E1** | **V4** | **E2** |
|---|---|---|---|---|---|---|
| NR^{a} | 100 | 100 | 80 | 80 | 80 | 80 |
| BR^{b} | 0 | 0 | 20 | 20 | 20 | 20 |
| Ruß^{e} | 50 | 50 | 0 | 0 | 62 | 62 |
| Kieselsäure^{d} | 0 | 0 | 55 | 55 | 0 | 0 |
| Silan^{e} | 0 | 0 | 8,5 | 8,5 | 0 | 0 |
| Hilfsmittel^{f} | 10 | 10 | 5 | 5 | 4 | 4 |
| 6PPD | 2 | 0 | 4 | 0 | 1,3 | 0 |
| Formel (II) | 0 | 2 | 0 | 4 | 0 | 1,3 |
| ZnO | 3 | 3 | 8 | 8 | 7 | 7 |
| Resorcin | 0 | 0 | 0 | 0 | 1,9 | 1,9 |
| Vorkondensat^{g} | 0 | 0 | 5 | 5 | 2,4 | 2,4 |
| HMMM | 0 | 0 | 0 | 0 | 4,3 | 4,3 |
| Kobaltsalz | 0 | 0 | 0,4 | 0,4 | 1,3 | 1,3 |
| Stearinsäure | 2 | 2 | 0 | 0 | 0 | 0 |
| Beschleuniger | 1,2 | 1,2 | 1,5 | 1,5 | 0,8 | 0,8 |
| Schwefel | 1,2 | 1,2 | 4 | 4 | 4,5 | 4,5 |
| Leistungsindex A | 100 | 101 | 100 | 94 | 100 | 94 |
| Leistungsindex B | 100 | 93 | 100 | 92 | 100 | 90 |
| Leistungsindex C | 100 | 96 | 100 | 85 | 100 | 88 |
| Leistungsindex D | 100 | 99 | 100 | 88 | 100 | 86 |

| | | | | | | |
|---|---|---|---|---|---|---|
| ^{a} NR TSR ^{b} Europrene Neocis BR 40, Fa. Polimeri ^{c} Ruß (Füllstoff): N339, Fa. Orion Engineered Carbons ^{d} Kieselsäure (Füllstoff): VN3, Fa. Evonik ^{e} 3,3'-Bis(triethoxysilylpropyl)tetrasulfid (TESPT) auf Ruß im Gewichtsverhältnis 1:1, X-50S, Evonik Industries, Deutschland; entspricht ca. 10 phf ^{f} Mischung unter anderem enthaltend TDAE-Mineralöl, Zinkseife, Harz ^{g} Oligopolymere aus Resorcin und Formaldehyd, d.h. ein Resorcin-Vorkondensat mit einem Gehalt an freiem Resorcin von weniger als 0,1 Gew.-% | | | | | | |

Wie bereits oben erwähnt, ist in der erfindungsgemäßen Kautschukmischung, die insbesondere für die Gummierung von Festigkeitsträgern geeignet ist, eine qualitative Leistungssteigerung in der Alterungsschutzwirkung zu beobachten, verglichen mit Kautschukmischungen enthaltend 6PPD.

Obwohl aus der WO 2023/143677 A1 bereits bekannt ist, dass eine Verbindung der Formel (II) eine längere Schutzwirkung als 6PPD gegenüber oxidativen Einflüssen bereitstellt, so konnte nicht notwendigerweise erwartet werden, dass zusätzlich auch ein qualitativ verbesserter Oxidationsschutz in Kautschukmischungen für die Gummierung von Festigkeitsträgern erreicht wird.

Diese Schlussfolgerung beruht auf den in Tabelle 1 genannten Parametern "Leistungsindex A" bis "D". Im Kontext der vorliegenden Erfindung bedeutet:

| | |
|---|---|
| Leistungsindex A: | Dieser Index beruht auf Rückprall-Messungen (ISO 4662, Resilience [%] bei Raumtemperatur). Für die Bestimmung des Leistungsindexes wurde zunächst der Wert einer ungealterten Probe mit 6PPD bestimmt; nach Abschluss der Alterung der Messwert der korrespondierenden gealterten Probe. Aus beiden Messwerten wurde eine Differenz gebildet, die eine auf den Messwert "Rückprall" beruhende absolute "Alterungsverschiebung" eines 6PPD-haltigen Prüfkörpers ergibt. Diese Differenz wurde zum Zwecke einer einfacheren Vergleichbarkeit auf einen Wert von 100 referenziert (Referenzwert; siehe V1, V3, V4). Dieses Vorgehen wurde mit einem Prüfkörper wiederholt, der auf einer erfindungsgemäßen Kautschukmischung beruht (hier enthaltend Verbindung der Formel (II)). Die aus diesen Messerwerten erhaltene Differenz wurde zum Referenzwert ins Verhältnis gesetzt (Verhältniswert; siehe V2, E1, E2). Der Verhältniswert stellt eine relative Alterungsverschiebung bezogen auf den 6PPD-enthaltenden Prüfkörper dar (siehe V1 vs. V2; V3 vs. E1, V4 vs. E2). Sowohl Referenzwert als auch Verhältniswert sind dimensionslos. Ein Verhältniswert kleiner 100 stellt eine Verbesserung dar, da das Ausmaß des Alterungseinflusses geringer ausfällt. Mit anderen Worten, ein kleinerer Wert weist darauf hin, dass die relative Alterungsverschiebung kleiner ist und somit eine qualitativ verbesserte Alterungsschutzwirkung erreicht wird, da Alterungsänderungen durch das entsprechende Alterungsschutzmittel effektiver unterbunden werden, bzw. die Alterungsreaktionen qualitativ stärker gebremst werden. |
| Leistungsindex B: | Dieser Index beruht auf Zugfestigkeits-Messungen (ASTM D 412; Messwert: M100 in [MPa], gemessen bei Raumtemperatur). Dieser Leistungsindex wurde analog zum Vorgehen wie unter "Leistungsindex A" beschrieben, bestimmt. Das dort Gesagte gilt hier entsprechend, hier jedoch beruhend auf einem Messwert aus einer Zugfestigkeitsmessung. |
| Leistungsindex C: | Dieser Index beruht ebenfalls auf Zugfestigkeits-Messungen (ASTM D 412; Messwert: Break Energy Density in [J/cm³], gemessen bei Raumtemperatur). Dieser Leistungsindex wurde analog zum Vorgehen wie unter "Leistungsindex A" beschrieben, bestimmt. Das dort Gesagte gilt hier entsprechend, hier jedoch beruhend auf einem alternativen Messwert aus einer Zugfestigkeitsmessung. |
| Leistungsindex D: | Dieser Index beruht ebenfalls auf Zugfestigkeits-Messungen (ASTM D 412; Messwert: Tear Elongation in [%], gemessen bei Raumtemperatur). Dieser Leistungsindex wurde analog zum Vorgehen wie unter "Leistungsindex A" beschrieben, bestimmt. Das dort Gesagte gilt hier entsprechend, hier jedoch beruhend auf einem weiteren, alternativen Messwert aus einer Zugfestigkeitsmessung. |

Die Ergebnisse V1 und V2 entsprechen den Mischungen, die aus dem Stand der Technik (WO 2023/143677 A1) bereits bekannt sind. Aus der WO 2023/143677 A1 ist bereits ein verbesserter Langzeitschutz durch eine Verbindung der Formel (II) grundsätzlich bekannt. Die konkrete Schutzwirkung der darin offenbarten Kautschukmischung, d.h. unter Maßgabe der hier herangezogenen Leistungsindizes A bis D, ist im relativen Vergleich zwischen V1 und V2 zu erkennen. Tabelle 1 zeigt, dass gegenüber 6PPD eine gewisse Verbesserung in allen Leistungsindizes eintritt (zwischen 99 und 93), wobei Leistungsindex B die größte (93 vs. 100) Verbesserung und Leistungsindex A sogar eine Verschlechterung zeigt (101 vs. 100). Überraschenderweise baut sich die Verbesserung gegenüber 6PPD in erfindungsgemäßen Kautschukmischungen weiter aus. Für alle Leistungsindizes wurden, referenziert auf 6PPD, noch bessere Werte erhalten, d.h. ein kleinerer Alterungseinfluss beobachtet, bzw. ein größerer Widerstand gegen Alterung. Hierbei zeigt E2 besonders beeindruckende Ergebnisse für Anwendungen, die auf metallische Festigkeitsträger abstellen.

Grundsätzlich erreichen alle erfindungsgemäßen Kautschukmischungen in allen Leistungsindizes eine Verbesserung, wobei E1 und E2 eine signifikante Verbesserung im Leistungsindex A (beide 94) gegenüber einer aus dem Stand der Technik bekannten Kautschukmischung, in der sogar eine Verschlechterung eintritt (101). Besonders beeindruckende Verbesserungen werden für die Leistungsindizes C und D erreicht.

## Patentansprüche

1. Eine schwefelvernetzbare Kautschukmischung für die Gummierung eines Festigkeitsträgers, die Mischung umfassend
(a) einen oder mehr als einen Polyisopren-Kautschuk in einer Gesamtmenge in einem Bereich von 30 bis 100 phr;
(b) einen oder mehr als einen von (a) verschiedenen Dienkautschuk in einer Gesamtmenge in einem Bereich von 0 bis 70 phr;
(c) eine oder mehr als eine Verbindung der Formel (I) 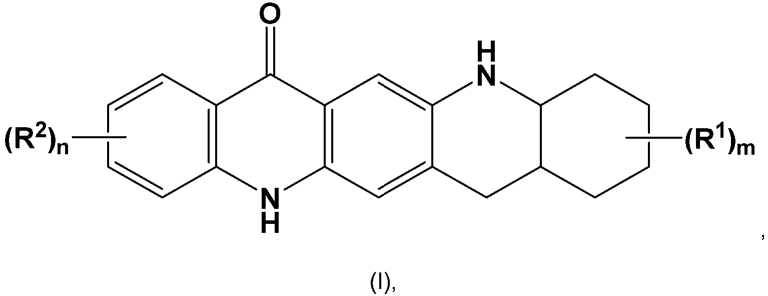
wobei
R¹ an der äußeren Cyclohexan-Gruppe und/oder der benachbarten Piperidin-Gruppe gebunden ist und unabhängig voneinander ausgewählt ist aus der Gruppe bestehend aus
xi) C₁- bis C₄-Alkyl-Resten und C₁- bis C₄-Alkoxy-Resten,
und
der Rest R² unabhängig voneinander ausgewählt ist aus der Gruppe bestehend aus
aliphatischen C₁- bis C₁₂-Resten, aromatischen Resten, Halogen-Resten, Cyano-Resten, Ester-Resten, Keton-Resten, Ether-Resten und Thioether-Resten,
und wobei
n den Wert 0 oder 1 oder 2 oder 3 oder 4 annimmt und die Reste R² im Fall von n gleich 2 oder 3 oder 4 unabhängig voneinander gleich oder verschieden sind, und
m eine ganze Zahl in einem Bereich von 1 bis 12 ist, wobei die Reste R¹ im Fall von m gleich 2 oder größer unabhängig voneinander gleich oder verschieden sind;
(d) einen oder mehr als einen Füllstoff; und
(e) mindestens ein Methylen-Donor / Methylen-Akzeptor Reaktionspaar, Vorkondensate und/oder Harze daraus.

2. Kautschukmischung nach Anspruch 1 zusätzlich umfassend (f) mindestens ein organisches und/oder anorganisches Kobaltsalz.

3. Kautschukmischung nach Anspruch 1 oder 2, wobei der eine oder mehr als eine Polyisopren-Kautschuk gemäß (a) mindestens einen natürlichen Polyisopren-Kautschuk (NR) und/oder mindestens einen synthetischen Polyisopren-Kautschuk (IR) umfasst.

4. Kautschukmischung nach einem der Ansprüche 1 bis 3, wobei der eine oder mehr als eine von (a) verschiedenen Dienkautschuk gemäß (b) einen oder mehr als einen Butadien-Kautschuk (BR) umfasst.

5. Kautschukmischung nach einem der Ansprüche 1 bis 4, wobei in der Verbindung gemäß Formel (I) n gleich 0 (Null) ist.

6. Kautschukmischung nach einem der Ansprüche 1 bis 5, wobei in Formel (I) R¹ ausgewählt ist aus der Gruppe bestehend aus
C₁- bis C₃-Alkylresten, vorzugsweise C₁- bis C₂-Alkylresten, besonders bevorzugt Methyl-Resten;
und/oder
m eine ganze Zahl in einem Bereich von 1 bis 10 ist, vorzugsweise von 2 bis 8, besonders bevorzugt von 2 bis 6, ganz besonders bevorzugt von 3 bis 6, am bevorzugtesten von 3 bis 4.

7. Kautschukmischung nach einem der Ansprüche 1 bis 6, wobei in Formel (I) m 2 oder größer ist, R¹ identisch ist und einen Methyl-Rest bedeutet, wobei mindestens zwei Methylreste an dasselbe Kohlenstoffatom gebunden sind.

8. Kautschukmischung nach einem der Ansprüche 1 bis 7, wobei die Verbindung der Formel (I) gemäß (c) eine Struktur der Formel (II) aufweist

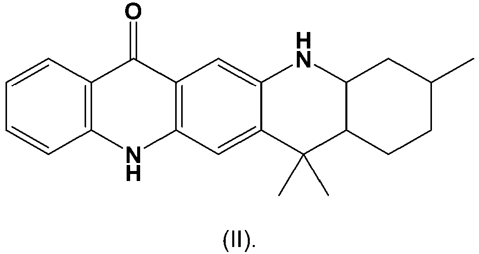

9. Kautschukmischung nach einem der Ansprüche 1 bis 8, wobei der eine oder mehr als eine Füllstoff gemäß (d) in einer Gesamtmenge im Bereich von 20 bis 90 phr vorliegt, vorzugsweise von 30 bis 85 phr, weiter bevorzugt von 40 bis 80 phr, besonders bevorzugt von 50 bis 75 phr, am bevorzugtesten von 52 bis 72 phr.

10. Kautschukmischung nach einem der Ansprüche 1 bis 9, wobei der eine oder mehr als eine Füllstoff gemäß (d) mindestens einen Ruß und/oder mindestens eine Kieselsäure umfasst.

11. Kautschukmischung nach einem der Ansprüche 1 bis 10, wobei gemäß (e) das Reaktionspaar, die Vorkondensate und/oder die Harze daraus Formaldehyd, Hexamethylentetramin (HMTA), Hexamethoxymethylmelamin (HMMM), Resorcin, substituierte Resorcine, Phenol, substituierte Phenole, N-Methyldioxazinane und/oder Aceton umfassen bzw. darauf basieren.

12. Kautschukmischung nach Anspruch 11, wobei
die substituierten Resorcine Resorcinmonoacetat, Resorcinmonobenzoat, Resorcinmonorosinat, Resorcindiphenylether, Resorcinmonomethylether und/oder Benzoylresorcin umfassen
und/oder
die substituierten Phenole 1,2-Dihydroxybenzol, 1,4-Dihydroxybenzol, 1,2,3-Trihydroxybenzol, 1,2,4-Trihydroxybenzol, 1,3,5-Trihydroxybenzol, 2-Methylphenol, 3-Methylphenol, 4-Methylphenol, 1,2-Hydroxybenzylcarbamate, 1,3-Hydroxybenzylcarbamate, 1,4-Hydroxybenzylcarbamate, Hydroxydiphenylamin (HDPA) und/oder N-(Hydroxyphenyl)maleimid umfassen.

13. Einen Festigkeitsträger gummiert mit einer schwefelvernetzten Kautschukmischung nach einem der Ansprüche 1 bis 12, so dass ein gummierter Festigkeitsträger resultiert.

14. Festigkeitsträger nach Anspruch 13, wobei der Festigkeitsträger ein textiler Festigkeitsträger, ein metallischer Festigkeitsträger, oder ein Komposit aus einem textilen und metallischen Festigkeitsträger ist.

15. Einen Fahrzeugreifen, vorzugsweise ein Fahrzeugluftreifen, der mindestens einen Festigkeitsträger nach einem der Ansprüche 13 oder 14 in wenigstens einem Bauteil aufweist, wobei das Bauteil vorzugsweise eine Karkasse, ein Gürtel, und/oder eine Gürtelbandage ist.
